# EUROPÄISCHE PATENTSCHRIFT

(11) **EP 3 206 070 B1**
(45) Veröffentlichungstag und Bekanntmachung des Hinweises auf die Patenterteilung: **23.05.2018**
(21) Anmeldenummer: 17162704.5
(22) Anmeldetag: 28.10.2009
(51) Int. Cl.: G02B 21/00, G02B 21/36, G02B 27/64, G02B 27/58, G01N 21/64

(54) **KOMBINATIONSMIKROSKOPIE**
COMBINATION MICROSCOPY
MICROSCOPIE COMBINÉE

(30) Priorität: 03.11.2008 DE 102008054317
(43) Veröffentlichungstag der Anmeldung: 16.08.2017
(62) Teilanmeldung aus: 09743876.6
(73) Patentinhaber: Carl Zeiss Microscopy GmbH, 07745 Jena (DE)
(72) Erfinder: Wolleschensky, Ralf, 07743 Jena (DE); Kleppe, Ingo, 07749 Jena (DE); Krampert, Gerhard, Pleasanton, CA 94566 (US); Kempe, Michael, 07751 Jena (DE)
(74) Vertreter: Patentanwälte Geyer, Fehners & Partner mbB

(56) Entgegenhaltungen:
- WO-A-2008/021834
- DE-A1- 3 436 167
- DE-A1- 19 654 208
- DE-A1-102006 047 912
- DE-A1-102006 060 180
- US-A- 5 481 401
- US-A- 6 072 625
- US-A1- 2007 023 686

## Beschreibung

Die Erfindung bezieht sich auf ein Verfahren und ein Mikroskop zur Mikroskopie einer Probe, wobei mehrere in ihrer Auflösung unterschiedliche Mikroskopieverfahren kombiniert werden.

Die Untersuchung von Proben mittels Mikroskopie ist ein weites technisches Gebiet, für das es vielfältige technische Lösungen gibt. Ausgehend von der klassischen Lichtmikroskopie haben sich verschiedenste Mikroskopieverfahren entwickelt.

Ein klassisches Anwendungsgebiet der Lichtmikroskopie zur Untersuchung von biologischen Präparaten ist die Lumineszenzmikroskopie. Hierbei werden bestimmte Farbstoffe (sogenannte Phosphore oder Fluorophore) zur spezifischen Markierung von Proben, z.B. von Zellteilen, verwendet. Die Probe wird, wie erwähnt, mit Anregungsstrahlung beleuchtet und das dadurch angeregte Lumineszenzlicht mit geeigneten Detektoren erfaßt. Üblicherweise ist dazu im Lichtmikroskop ein dichroitischer Strahlteiler in Kombination mit Blockfiltern vorgesehen, die die Fluoreszenzstrahlung von der Anregungsstrahlung abspalten und eine getrennte Beobachtung ermöglichen. Durch dieses Vorgehen ist die Darstellung einzelner, verschieden gefärbter Zellteile im Lichtmikroskop möglich. Natürlich können auch mehrere Teile eines Präparates gleichzeitig mit verschiedenen, sich spezifisch an unterschiedliche Strukturen des Präparates anlagernden Farbstoffen eingefärbt werden. Dieses Verfahren bezeichnet man als Mehrfachlumineszenz. Auch kann man Proben vermessen, die per se, also ohne Markierungsstoffzugabe lumineszieren.

Lumineszenz wird hier, wie allgemein üblich, als Oberbegriff für Phosphoreszenz und Fluoreszenz verstanden, erfaßt also beide Prozesse.

Weiter ist es zur Probenuntersuchung bekannt, Laser-Scanning-Mikroskopie (auch LSM abgekürzt) zu verwenden, die aus einem dreidimensional ausgeleuchteten Bild mittels einer konfokalen Detektionsanordnung (dann spricht man von einem konfokalen LSM) oder einer nichtlinearen Probenwechselwirkung (sogenannte Multiphotonenmikroskopie) nur diejenige Ebene wiedergibt, die sich in der Fokusebene des Objektives befindet. Es wird ein optischer Schnitt gewonnen, und die Aufzeichnung mehrerer optischer Schnitte in verschiedenen Tiefen der Probe erlaubt es anschließend, mit Hilfe einer geeigneten Datenverarbeitungseinrichtung ein dreidimensionales Bild der Probe zu generieren, das aus den verschiedenen optischen Schnitten zusammengesetzt ist. Die Laser-Scanning-Mikroskopie ist somit zur Untersuchung von dicken Präparaten geeignet.

Natürlich wird auch eine Kombination von Lumineszenzmikroskopie und Laser-Scanning-Mikroskopie verwendet, bei der eine lumineszierende Probe in verschiedenen Tiefenebenen mit Hilfe eines LSM abgebildet wird.

Laser-Scanning-Mikroskope werden auch als Nachrüstmodule für normale Lichtmikroskope angeboten, die dann neben einer normalen Mikroskopie auch eine Laser-Scanning-Mikroskopie von Proben ermöglichen. Die Laser-Scanning-Mikroskopie und insbesondere die Laser-Scanning-Mikroskopie lumineszierender Proben ist dabei wie die klassische Mikroskopie auch durch die optische Auflösungsgrenze des verwendeten Mikroskops geprägt. Die Laser-Scanning-Mikroskopie erlaubt allerdings eine sehr viel höhere Tiefenschärfe, obwohl bei beiden Mikroskopen die optische Auflösung durch die physikalischen Gesetze beugungsbegrenzt ist.

Für Auflösungen jenseits der Beugungsgrenze wurden in der letzen Zeit verschiedene Ansätze entwickelt. Diese Mikroskopieverfahren zeichnen sich dadurch aus, daß sie im Vergleich zum klassischen Mikroskop dem Anwender eine höhere laterale und/oder axiale optische Auflösung zur Verfügung stellen. In dieser Beschreibung werden solche Mikroskopieverfahren als hochauflösende Mikroskopieverfahren bezeichnet, da sie eine Auflösung jenseits der optischen Beugungsgrenze erreichen. Beugungsbegrenzte Mikroskope werden hingegen als klassische Mikroskope bezeichnet. Sie realisieren bekannte optische Weitfeldmikroskopie oder Laser-Scanning-Mikroskopie.

Ein hochauflösendes Mikroskopieprinzip ist in der US 2007/0023686 A1 beschrieben. Diese Veröffentlichung befaßt sich mit einer geschickten Ausnutzung einer nicht-linearen Fluoreszenzkennlinie des Farbstoffes DRONPA. Durch geschickte Überlagerung jeweils beugungsbegrenzter Anregungsstrahlungsmuster unterschiedlich hoher Intensität wird dafür gesorgt, daß Fluoreszenzstrahlung lediglich aus einem Bereich kommen kann, der kleiner ist, als es die Beugungsgrenze bei der Anregung eigentlich erlaubt. Als Muster für die Einstrahlung sind verschiedene geometrische Formen offenbart, insbesondere streifenförmige Muster. Dieses Verfahren liefert ein hochaufgelöstes Bild der Probe.

Ein weiteres hochauflösendes Mikroskopieprinzip schildert die DE 102006047912 A1 in Form eines Verfahren und einer Anordnung zur parallelisierten mikroskopischen Bildgebung mit einer ersten Beleuchtung einer Probe in mindestens einer Region zur Anregung einer Fluoreszenz und einer der Region zugeordneten ortsauflösenden Detektion des Probenlichtes mit Detektorelementen, wobei durch eine zweite Beleuchtung eine Unterteilung der Region in separate, fluoreszierende Teilregionen erfolgt, die den Detektorelementen zugeordnet sind, wobei die Separation der Teilregionen durch räumliche Trennung der fluoreszierenden Bereiche durch Zwischenregionen mit verminderter oder fehlender Fluoreszenz oder/und durch verschiedene spektrale Eigenschaften der Fluoreszenz aus den Teilregionen erfolgt. Es wird ein hochaufgelöstes Bild der Probe erzeugt.

Die DE 102006060180 A1 offenbart ein hochauflösendes Mikroskopieverfahren, das die Probe mit Markierungsmolekülen markiert, welche mit einem Umschaltsignal aktivierbar sind, so daß sie erst dann zur Fluoreszenz anregbar sind. Das Umschaltsignals wird auf die Probe derart aufgebracht, daß nur eine Teilmenge der in der Probe vorhandenen Markierungsmoleküle aktiviert wird. Dadurch bestehen in der Probe Teilbereiche, in denen aktivierte Markierungsmoleküle zu den ihnen nächst benachbarten aktivierten Markierungsmoleküle einen Abstand haben, der größer oder gleich der vom Mikroskop erreichten optischen Auflösung ist. Man spricht davon, daß diese Moleküle isoliert sind. Wird nun die Probe zur Fluoreszenz angeregt und mit der optischen Auflösung abgebildet, leuchten im Bild die isolierten Moleküle. Das erlaubt es, Bilddaten zu erzeugen, welche die geometrischen Orte der isolierten, leuchtenden Moleküle mit einer über die optische Auflösung gesteigerten Ortsauflösung anzugeben - man spricht von lokalisieren. Durch mehrmalige Isolation und Lokalisation entsteht ein hochaufgelöstes Bild der Probe.

Der Auflösungsgewinn bei der hochaufgelösten Mikroskopie wird erkauft durch eine geringere Meßgeschwindigkeit, ein kleineres Meßfeld sowie Begrenzungen hinsichtlich der Eindringtiefe und der brauchbaren Markierungsstoffe für die Lumineszenzmikroskopie.

Somit können hochauflösende Mikroskopieverfahren nur für bestimmte Untersuchungen aufgrund der unerläßlichen Kompromisse bezüglich Probenpräparation und Aufnahmeparameter (insbesondere Aufnahmegeschwindigkeit etc.) verwendet werden. Dies ist besonders mißlich, wenn man in einer großen Probe kleinere Bereiche untersuchen möchte oder eine zeitliche Entwicklung einer Probe verfolgen möchte, die unterschiedlich schnell verläuft.

Der Erfindung liegt deshalb die Aufgabe zugrunde, ein Mikroskop bzw. ein Verfahren zur Mikroskopie anzugeben, mit dem die bisherigen Auslegungs- und Anwendungskonflikte, die mit der hochauflösenden Mikroskopie einhergehen, behoben sind.

Die Erfindung ist in den Ansprüchen 1 und 9 definiert.

Zum Erzeugen eines Bildes einer Probe mittels Mikroskopieverfahren, die unterschiedliche Ortsauflösungen realisieren, werden mindestens zwei der folgenden Mikroskopieverfahren kombiniert: ein erstes Mikroskopieverfahren, in dem die Probe durch strukturierte Linien- oder Weitfeldbeleuchtung zur Lumineszenz angeregt wird, die Strukturierung gedreht und für jede Drehstellung mehrmals verschoben wird, wobei mindestens drei Drehlagen und pro Drehlage mindestens drei Verschiebelagen realisiert werden, jeweils die lumineszierende Probe mit einer vorbestimmten optischen Auflösung auf einen Flächendetektor abgebildet wird und aus den so erhaltenden Bildern durch eine Fourieranalyse umfassende rechnerische Bearbeitung ein erstes Mikroskopie-Bild mit über die vorbestimmte optische Auflösung hinaus gesteigerter Ortsauflösung erzeugt wird, ein zweites Mikroskopieverfahren, in dem die Probe mit Markierungsmolekülen markiert wird, welche mit einem Umschaltsignal aktivierbar sind, so daß sie erst dann zur Abgabe bestimmter Lumineszenzstrahlung anregbar sind, das Umschaltsignals auf die Probe derart aufgebracht wird, daß nur eine Teilmenge der in der Probe vorhandenen Markierungsmoleküle aktiviert werden, wobei in der Probe Teilbereiche bestehen, in denen aktivierte Markierungsmoleküle zu den ihnen nächst benachbarten aktivierten Markierungsmoleküle einen Abstand haben, der größer oder gleich der vorbestimmten optischen Auflösung ist, die aktivierten Moleküle zur Abgabe von Lumineszenzstrahlung angeregt werden, die Lumineszenzstrahlung abgebende Probe mit der vorbestimmten optischen Auflösung auf den Flächendetektor abgebildet wird, das Bild analysiert wird und daraus Bilddaten erzeugt werden, welche die geometrischen Orte der Lumineszenzstrahlung abgebenden Markierungsmoleküle mit einer über die optische Auflösung gesteigerten Ortsauflösung angeben, und aus den Bilddaten ein zweites Mikroskopie-Bild erzeugt wird, ein drittes Mikroskopieverfahren zur Erzeugung eines dritten Mikroskopie-Bildes mittels Laserscanningmikroskopie, ein viertes Mikroskopieverfahren, bei dem die Probe mit zur STED-Technik geeigneten Markierungsmolekülen markiert wird und mittels STED, ein viertes Mikroskopie-Bild erzeugt wird, wobei die mindestens zwei erhaltenen Mikroskopie-Bilder zu einem Komposit-Bild überlagert werden.

Ein Kombinations-Mikroskop, ausgebildet zur Mikroskopie einer Probe mit mindestens zwei sich in ihrer Auflösung unterscheidenden Mikroskopieverfahren, weist auf: ein Objektiv, das für alle Mikroskopieverfahren die Probe erfaßt, einen Detektionsstrahlengang und mindestens einen Beleuchtungsstrahlengang, die zumindest teilweise zusammenfallen und alle durch das Objektiv laufen, ein an den Detektionsstrahlengang angebundenes Mikroskopmodul, das eine Tubuslinse und einen Flächendetektor aufweist und zusammen mit dem Objektiv die Probe auf den Flächendetektor abbildet, ein an den Beleuchtungsstrahlengang angebundenes Weitfeldbeleuchtungsmodul zur Weitfeldbeleuchtung der Probe durch das Objektiv, wobei das Weitfeldbeleuchtungsmodul zur Abgabe von Beleuchtungsstrahlung bei mindestens zwei verschiedenen Wellenlängenbereichen ansteuerbar ist, und ein im Beleuchtungsstrahlengang in Beleuchtungsrichtung dem Weitfeldbeleuchtungsmodul nachgeordneter Beleuchtungsstrahlungsmodulator, der ansteuerbar im Beleuchtungsstrahlengang aktivier- und deaktivierbar ist und im aktivierten Zustand der Beleuchtungsstrahlung eine streifenförmige Modulation aufprägt, wobei der Beleuchtungsstrahlungsmodulator derart ansteuerbar ist, daß die streifenförmige Modulation senkrecht zu einer optischen Achse des Beleuchtungsstrahlenganges verschiebbar ist, und wobei weiter eine ansteuerbare Rotationseinrichtung vorgesehen ist, mit welcher entweder die streifenförmige Modulation um die optische Achse des Beleuchtungsstrahlenganges drehbar ist oder durch den aktivierten Beleuchtungsstrahlungsmodulator gelaufene und dadurch mit der streifenförmigen Modulation versehenen Strahlenbündel im Beleuchtungsstrahlengang um die optische Achse des Beleuchtungsstrahlenganges drehbar sind, und eine Steuereinrichtung, die mit dem Mikroskopmodul, dem Weitfeldbeleuchtungsmodul, dem Beleuchtungsstrahlungsmodulator und der Rotationseinrichtung verbunden ist und das Mikroskop in verschiedene Betriebsmodi steuert, wobei die Steuereinrichtung dazu ausgebildet ist, in einem ersten Betriebsmodus den Beleuchtungsstrahlungsmodulator zu aktivieren und zusammen mit der Rotationseinrichtung anzusteuern sowie den Flächendetektor auszulesen und von diesem gelieferte Daten zu verarbeiten, um das erste Mikroskopieverfahren des Anspruchs 1 auszuführen, und dazu ausgebildet ist, in einem zweiten Betriebsmodus den Beleuchtungsstrahlungsmodulator zu deaktivieren und das Weitfeldbeleuchtungsmodul nacheinander zur Abgabe der Beleuchtungsstrahlung bei den mindestens zwei verschiedenen Wellenlängenbereichen anzusteuern sowie den Flächendetektor auszulesen und von diesem gelieferte Daten zu verarbeiten, um das im vorherigen Absatz genannte zweite Mikroskopieverfahren auszuführen.

Der Erfindung legt also eine bislang noch nicht im Stand der Technik realisierte oder beschriebene Kombination bestimmter hochauflösender Mikroskopieverfahren mit klassischen Mikroskopieverfahren vor. Dadurch ist es möglich, vergleichsweise kleine Probenfeldausschnitte (im englischen auch als region of interest = ROI bezeichnet) hochauflösend abzubilden und dennoch diese mit klassischen Mikroskopaufnahmen zu ergänzen bzw. diese damit aufzufinden. Auch werden Meßabläufe in der hochauflösenden Mikroskopie durch die Verwendung von Daten aus dem klassischen Mikroskopieverfahren vereinfacht bzw. die Qualität der Daten, die mit deren hochauflösenden Mikrokopieverfahren gewonnen werden, steigen.

Für die Erfindung können verschiedene, für sich alleine bereits im Stand der Technik bekannte hochauflösende Mikroskopieverfahren mit der Laser-Scanning-Mikroskopie oder untereinander kombiniert werden.

Ein im Rahmen der Erfindung relevantes hochauflösendes Verfahren ist in US 5866911 beschrieben, deren diesbezügliche Offenbarung hier vollumfänglich einbezogen sei. Dabei wird zur Auflösungssteigerung mit einer zwei Wellenlängen aufweisenden Lichtstrahlung gearbeitet. Die Lichtstrahlung der einen Wellenlänge wird als Anregungslichtstrahl auf die zu messende Probe mittels eines Objektives fokussiert und regt dort Lumineszenz, hier Fluoreszenz, an. Die Erhöhung der Ortsauflösung erfolgt nun dadurch, daß ein Lichtstrahl mit der anderen Wellenlänge in Teilbereichen den durch den Anregungslichtstrahl angeregten fluoreszierenden Zustand entvölkert. Man bezeichnet diesen Lichtstrahl deshalb auch als "Entvölkerungs-Strahlung". Nun erfolgt die Einstrahlung z.B. so, daß sich das Hauptmaximum des Entvölkerungs-Lichtstrahls und das Hauptmaximum des Anregungslichtstrahls teilweise überdecken. Durch diese "Abregung" der Probe an den Rändern des mit Anregungsstrahlung beleuchteten Bereiches, sendet nur noch ein reduziertes Volumen Fluoreszenz aus. Die Auflösung ist durch diese Volumenreduktion folglich gesteigert.

Mehrere Mechanismen können eine solche Entvölkerung bewirken, wie beispielsweise wie in der DE 4416558 C2, US 6633432 oder DE 10325460 A1 beschrieben. Sie alle können hier verwendet werden.

Ein Beispiel ist die Abregung durch stimulierte Emission (STED). Eine Anregungsstrahlung fegt ein Fluorophor an. Eine Entvölkerung des derart angeregten Niveaus wird in Richtung des Grundniveaus durch Lichtstrahlung mit einer Wellenlänge im Bereich der Fluoreszenzwellenlänge bewerkstelligt. Diese stimulierte Emission hat eine Wellenlänge, die der der Lumineszenz fast identisch entspricht. Somit ist die Anregungswellenlänge um den Betrag des Stokesshiftes kurzwelliger als die der Entvölkerungs-Strahlung. Die Auflösungssteigerung gemäß dieses Ansatzes verwendet also zwei unterschiedliche Lichtquellen, wie auch die DE 4416558 C2 belegt, deren dazu relevante Offenbarung hier voll einbezogen sei.

Ein weiterer möglicher Prozeß der Entvölkerung für das angeregte Niveau ist eine Anregung in ein noch höheres Niveau, das keine Lumineszenz mehr aussenden kann. Dieses Anheben wird im Englischen als Excited State Absorption bezeichnet, weshalb dieses Vorgehen auch mit dem Kürzel ESA belegt ist. Eine entsprechende Schilderung dieses Prozesses findet sich beispielsweise in der hier ebenfalls eingebundenen US 6633432. Da der Abstand der Energieniveaus in einer Probe bzw. einem Farbstoff zu höheren Niveaus hin abnimmt, verwendet man zur Entvölkerung bei dem ESA-Prozeß eine Lichtquelle mit einer geringeren Energie und damit längeren Wellenlänge, als zur Anregung. Man verwendet wiederum zwei verschiedene Wellenlängen, also z. B. Lichtquellen.

Ein weiteres Verfahren zur Entvölkerung stellt für die Fluoreszenz die sogenannte Reversible Saturable Optical Fluorescence Transition (RESOLFT) dar, die z.B. in der auch voll einbezogenen DE 10325460 A1 beschrieben ist. Dieses Mikroskopieverfahren verwendet zum räumlich hochauflösenden Abbilden einen Markierungsstoff, der mit Hilfe eines Umschaltstrahls wiederholt aus einem ersten Zustand, in dem Fluoreszenz stattfindet, in einen zweiten Zustand, in dem der Farbstoff nicht fluoresziert, überführbar ist, wobei der Farbstoff aus dem zweiten Zustand in den ersten Zustand zurückkehren kann. Die Probe wird in Teilbereichen mit dem Umschaltstrahl in den zweiten Zustand überführt, wobei ein definierter Bereich der Probe ausgelassen wird. Mit einem Anregungsstrahl wird dann Fluoreszenzlicht angeregt und anschließend registriert. Das Fluoreszenzlicht stammt dann nur aus Probenvolumina, die zuvor nicht mit dem Umschaltstrahl beaufschlagt wurden. Durch geeignete Überlappung von Anregungsstrahl und Umschaltstrahl ist das Volumen, aus dem Fluoreszenzlicht emittiert wird, kleiner, als es die Auflösung des Anregungsstrahls und die Schärfe der Nullstelle des Umschaltstrahls a priori erlaubten. Eine Weiterbildung dieses hochauflösenden Mikroskopieverfahrens ist in der EP 1907826, welche diesbezüglich hier ebenfalls vollständig eingebunden wird, beschrieben. Dort gelingt durch Verwendung geeigneter Farbstoffe die Anforderungen an die nötigen Strahlungsquellen zu vereinfachen. Für die Entvölkerung wird hier eine Nichtlinearität des Anregungsverhaltens des Farbstoffes ausgenutzt, wodurch Strahlung einer Wellenlänge eingespart werden kann.

In allen drei genannten hochauflösenden Mikroskopieverfahren erfolgt also die Verhinderung von Fluoreszenz durch den Einsatz von Lichtstrahlung mit einer Wellenlänge, die ungleich der Wellenlänge zur Anregung ist. Zugleich sollte diese Lichtstrahlung mindestens eine scharf begrenzte örtliche Nullstelle der Strahlungsleistung aufweisen, die die endgültige Auflösung der detektierten Fluoreszenzstrahlung bestimmt. Für den STED-Prozeß kann z. B. eine Anregungsstrahlquelle eine Airy-Verteilung in der Probe erzeugen, mit der die Probe aus dem Grundniveau in den angeregten Zustand überführt wird. Die Entvölkerung des angeregten Zustands erfolgt mittels einer Entvölkerungslichtquelle, die z. B. durch eine Phasenplatte eine donut- oder torus-förmigen Strahlverteilung in der Probe hat. Die Lumineszenzstrahlung der nicht-entvölkerten d.h. nicht-abgeregten Farbstoffmoleküle wird mit Hilfe eines Detektors erfaßt. Durch die Entvölkerung wird die Auflösung des Mikroskops über die Beugungsbegrenzung, die sich aus der Airy-Verteilung ergibt, hinaus gesteigert. Dies kommt durch eine verkleinerte Punktverwaschungsverteilung des hochauflösenden Mikroskops im Vergleich zum konventionellen Mikroskop zum Ausdruck.

Ein weiteres hochauflösendes Mikroskopieverfahren, das im Rahmen der Erfindung möglich ist, ist in der EP 1157297 B1 angesprochen. Dabei werden mittels strukturierter Beleuchtung nichtlineare Prozesse ausgenützt. Als Nichtlinearität dient die Sättigung der Fluoreszenz. Durch eine strukturierte Beleuchtung, welche mittels eines Beleuchtungsstrahlungsmodulators erzeugt wird, erfolgt eine Verschiebung des Objektraumspektrums relativ zur Übertragungsfunktion des optischen Systems. Konkret bedeutet die Verschiebung des Spektrums, daß Objektraumfrequenzen V0 bei einer Raumfrequenz V0 - Vm, wobei Vm die Frequenz der strukturierten Beleuchtung ist, übertragen werden. Bei gegebener, durch das System maximal übertragbarer Raumfrequenz ermöglicht dies den Transfer von um die Verschiebefrequenz Vm über der maximalen Frequenz der Übertragungsfunktion liegender Raumfrequenzen des Objektes. Dieser Ansatz erfordert einen Rekonstruktionsalgorithmus zur Bilderzeugung und die Verwertung mehrerer Aufnahmen für ein Bild. Die bezüglich der entsprechenden Beschreibung des auflösenden Mikroskopieverfahrens ebenfalls voll einbezogene EP 1157297 B1 verwendet also eine strukturierte Weitfeldbeleuchtung der Probe, wobei, beispielsweise durch ein Amplituden/Phasen-Gitter, eine streifenförmige Modulation aufgeprägt wird. Fluoreszenz in der Probe wird ebenfalls weitfelddetektiert. Die Modulation wird nun in mindestens drei verschiedene Drehlagen gebracht, z. B. 0°, 120° und 240°, und in jeder Drehlage wird die Modulation in mind. drei verschiedene Positionen verschoben. In jeder Verschiebung der Drehlagen (insgesamt also mind. 9 Bildpositionen) wird die Probe weitfelddetektiert. Weiter hat das Gitter Frequenzen möglichst nahe der Grenzfrequenz, zu deren Übertragung die verwendete optische Anordnung in der Lage ist. Unter Verwendung einer Fourieranalyse erfolgt dann die erwähnte Spektrumverschiebung, wobei insbesondere die 0. und +/- 1. Beugungsordnung in den Bildern ausgewertet wird. Dieses Mikroskopieverfahren wird auch als SIM-Verfahren bezeichnet.

Eine Weiterbildung des SIM-Verfahrens kann mit einer linienförmigen Beleuchtung erreicht werden, die senkrecht zur Streifenrichtung der Modulation liegt. Man hat dann eine Linienbeleuchtung, wobei längs der Linie sich die Streifenstruktur wiederfindet. Die linienförmige Beleuchtung ist ihrerseits durch die Modulation strukturiert. Die linienförmige Beleuchtung erlaubt eine konfokale Schlitzdetektion und damit nochmals eine Auflösungssteigerung. Dieses Verfahren wird auch als SLIM abgekürzt.

Eine nochmalige Steigerung der Auflösung erhält man, wenn die Beleuchtungsstrahlungsmodulation an Beleuchtungsstrahlung ausgeführt wird, die derart intensiv ist, daß die Fluoreszenz der Probe in den hellen Bereich der strukturierten Beleuchtung eine Sättigung erreicht. Dann hat die Modulation auf der Probe bezüglich der Fluoreszenz keine Sinusverteilung mehr, sondern aufgrund der Sättigungseffekte noch höhere Harmonische jenseits der optischen Grenzfrequenz. Dieses Verfahren wird auch als saturated pattern excitation microscopy (SPEM) abgekürzt. Diese drei Varianten einer Mikroskopie, die mittels einer strukturierten Beleuchtung hochauflösend ist, können ebenfalls in der erfindungsgemäßen Kombination bzw. mit dem erfindungsgemäßen Mikroskop realisiert werden.

Ein weiteres hochauflösendes Verfahren, das unabhängig von der Laserscanningmikroskopie eine Auflösung jenseits der Beugungsgrenze erreicht, ist schließlich auch aus der WO 2006127692 und der DE 102006021317 bekannt. Alle drei Druckschriften werden diesbezüglich hier voll in die Offenbarung einbezogen. Dieses mit PAL abgekürzte Mikroskopieverfahren (Photo Activated Light Microscopy) verwendet eine Markierungssubstanz, welche mittels eines optischen Aktivierungssignals aktiviert werden kann, so daß sie nur im aktivierten Zustand mit Anregungsstrahlung zur Abgabe von bestimmter Fluoreszenzstrahlung angeregt werden kann. Nicht aktivierte Moleküle der Markierungssubstanz senden auch nach Einstrahlung von Anregungsstrahlung keine oder zumindest keine merkliche Fluoreszenzstrahlung ab. Im PAL-Mikroskopieverfahren wird nun das Aktivierungssignal so aufgebracht, daß die dadurch aktivierten Markierungsmoleküle von benachbarten aktivierten Molekülen so beabstandet sind, daß sie gemessen an der optischen Auflösung der Mikroskopie getrennt oder nachträglich trennbar sind. Die aktivierten Moleküle werden also zumindest weitgehend isoliert. Für diese isolierten Moleküle wird dann das Zentrum deren auflösungsbegrenzt bedingter Strahlungsverteilung ermittelt und daraus rechnerisch die Lage der Moleküle mit höherer Genauigkeit bestimmt, als es die optische Abbildung eigentlich zuläßt. Diese gesteigerte Auflösung durch rechnerische Schwerpunktbestimmung der Beugungsverteilung wird in der englischen Fachliteratur auch als "superresolution" bezeichnet. Sie erfordert, daß in der Probe zumindest einige der aktivierten Markierungsmoleküle mit der optischen Auflösung mit der die Lumineszenzstrahlung detektiert wird, unterscheidbar, also isoliert sind. Dann kann für solche Moleküle die Ortsangabe mit gesteigerter Auflösung erreicht werden.

Zum Isolieren einzelner Markierungsmoleküle nutzt das PAL-Mikroskopieverfahren die Tatsache, daß die Wahrscheinlichkeit, mit der ein Markierungsmolekül nach Empfang eines Photons der Aktivierungsstrahlung aktiviert wird, für alle Moleküle gleich ist. Über die Einstellung der Intensität der Umschaltstrahlung und damit die Zahl der Photonen, die auf eine Flächeneinheit der Probe fällt, kann also dafür gesorgt werden, daß die Wahrscheinlichkeit, in einem Flächenbereich der Probe vorhandene Markierungsmoleküle zu aktivieren, so gering ist, daß es ausreichend Bereiche gibt, in denen innerhalb der optischen Auflösung nur unterscheidbare Markierungsmoleküle Fluoreszenzstrahlung emittieren. Durch passende Wahl der Intensität, d.h. der Photonendichte der Umschaltstrahlung, wird erreicht, daß möglichst nur bezogen auf die optische Auflösung isoliert liegende Markierungsmoleküle aktiviert werden und nachfolgend Fluoreszenzstrahlung aussenden. Für diese isolierten Moleküle wird dann rechnerisch der Schwerpunkt der beugungsbedingten Intensitätsverteilung und damit die Lage des Markierungsmoleküls mit gesteigerter Auflösung ermittelt. Zur Abbildung der gesamten Probe wird die Isolierung der Markierungsmoleküle der Teilmenge durch Einbringen der Aktivierungsstrahlung, nachfolgende Anregung und Fluoreszenzstrahlungsabbildung so lange wiederholt, bis möglichst alle Markierungsmoleküle einmal in einer Teilmenge enthalten und innerhalb des Auflösung der Abbildung isoliert waren. Zwischen den aufeinanderfolgenden Schritten des Anregens und der erneuten Aktivierung werden die Markierungsmoleküle deaktiviert. Dies kann entweder durch ein zusätzliches (vorzugsweise optisches) Deaktivierungssignal oder dadurch erreicht werden, daß die Markierungsmoleküle nach der Anregung und der Aussendung von Fluoreszenzstrahlung ausbleichen.

Das PAL-Mikroskopieverfahren hat den Vorteil, daß weder für die Aktivierung, noch die für Anregung eine hohe Ortsauflösung benötigt wird. Statt dessen kann sowohl die Aktivierung als auch die Anregung in Weitfeldbeleuchtung erfolgen.

Im Ergebnis werden die Markierungsmoleküle durch geeignete Wahl der Intensität der Aktivierungsstrahlung statistisch in Teilmengen aktiviert. Deshalb muß für die Generierung eines Gesamtbildes einer Probe, in dem die Positionen aller Markierungsmoleküle rechnerisch mit z.B. jenseits der Beugungsgrenze liegender Auflösung bestimmt werden können, eine Vielzahl von Einzelbildern ausgewertet werden. Die Positionsbestimmung der Moleküle in den Einzelbildern erfolgt durch rechnerische Prozeduren, wie sie beispielsweise in Egner et al., Biophysical Journal, S. 3285-3290, Band 93, November 2007, beschrieben sind.

Die erfindungsgemäße Kombination verschiedener hochauflösender Mikroskopieverfahren untereinander oder mit der Laserscanningmikroskopie und gegebenenfalls auch zusätzlich mit normaler Weitfeldmikroskopie erlaubt es, beim Auftreten eines vorbestimmten Musters im Bild die Probe dann mit einem der hochauflösenden Mikroskopieverfahren abzubilden, insbesondere nachdem die Probe zuvor hinsichtlich in der Probe ablaufender Veränderungen fixiert wurde. Da bei hochauflösenden Mikroskopieverfahren die Bildaufnahmegeschwindigkeit reduziert ist, kann eine schnelle Bilderzeugung erreicht werden, wenn für das hochauflösende Mikroskopieverfahren ein kleines Probenfeld ausgewählt wird. Zudem können auf diese Art und Weise dynamische Prozesse untersucht werden, die bezogen auf die Bildaufnahmegeschwindigkeit des hochauflösenden Verfahrens eigentlich zu schnell ablaufen, indem erst bei Auftreten des vorbestimmten Musters, das einen bestimmten Zustand der dynamischen Entwicklung anzeigt, die Probe fixiert und hochaufgelöst vermessen wird. Für die Fixierung ist es bevorzugt, eine entsprechende Probenfixierungseinrichtung, wie z. B. zum Auftropfen einer Fixierlösung oder zum Schockgefrieren, im Mikroskop integrieren. Alternativ kann man auch eine, z. B. lebende Probe, in einem Ruhezustand hochauflösend untersuchen und durch optische, chemische oder andere Stimuli schnelle dynamische Prozesse initiieren und diese dann mit einem schnelleren der anderen Mikroskopieverfahren untersuchen, z. B. mit LSM oder klassischer Weitfeldmikroskopie. Eine solche Beobachtungsfolge (hochauflösende Erfassung eines Ruhezustandes, Stimulierung einer dynamischen Veränderung, Betrachtung der dynamischen Veränderung mit einem geringer auflösenden und damit schnelleren Mikroskopieverfahren) kann bei Bedarf auch zyklisch wiederholt werden.

Verwendet man klassische Verfahren und hochaufgelöste Verfahren simultan (z. B. LSM und PAL-M), so können beispielsweise sich schnell veränderte Strukturen mit dem klassischen Verfahren und statische Objekte hochaufgelöst erfaßt werden. Es ist also im Rahmen der Erfindung vorgesehen, daß die unterschiedlichen Mikroskopieverfahren unterschiedliche, gegebenenfalls überlappende Bildfelder in der Probe simultan erfassen. Beispielsweise kann man Zellmembranen statisch mittels PAL-M vermessen und zugleich Vesikel hochdynamisch mittels eines linienscannenden LSM mit klassischer Auflösung erfassen.

Die unterschiedlichen Mikroskopie-Bilder werden erfindungsgemäß kombiniert, insbesondere zusammengefügt oder überlagert. Dies kann zweidimensional, dreidimensional und jeweils zusätzlich auch über der Zeit erfolgen, wobei die Bildfelder, wie bereits erwähnt, unterschiedliche Größe haben können. Die Bildfelder können sich voll oder teilweise überlappen, es ist aber auch möglich, sie nebeneinander zu legen. Um eine korrekte Relativlage der kombinierten Bilder zu gewährleisten, werden vorzugsweise Bildmarkierungen ausgewertet. Diese können erhalten werden, indem die Probe zuvor mit entsprechenden Strukturen, z. B. Partikeln, insbesondere Goldpartikeln, versehen wird, die in den verwendeten Mikroskopie-Bildern erscheinen. Die Lagen dieser Bildmarkierungen werden zur Ausrichtung und Justage der einzelnen Bilder ausgewertet und von der Steuereinrichtung berücksichtigt.

Es zeigte sich, daß mit dem erfindungsgemäßen Vorgehen durch die Hinzunahme des klassisch aufgelösten Bildes ein Zusammenhang zwischen hochaufgelösten Bildelementen leicht hergestellt werden kann. Auch ist es möglich, teilweise komplementäre Informationen durch die Anwendung mindestens zweier Mikroskopieverfahren zu erschließen. Wird beispielsweise eine TIRF-Beleuchtung für das PAL-Mikroskopieverfahren verwendet, erfaßt man hochsensible Bildinformationen an der Grenzfläche zum Deckglas. Die parallele Anwendung der Laserscanningmikroskopie gewinnt aufgrund der höheren Eindringtiefe auch Informationen aus anderen Probenebenen und erlaubt es, diese mit der hochaufgelösten Detailinformation aus dem PAL-Mikroskopieverfahren in einen Zusammenhang zu stellen. Es wird hierdurch beispielsweise möglich, bestimmte Abläufe hochaufgelöst an Membranen zu studieren und gleichzeitig in Bezug zu Vorgängen innerhalb der Zelle oder eines Zellverbandes zu setzen, die mit klassischer Auflösung erfaßt wurden.

Insbesondere ist es möglich, den Probenausschnitt, der mit einen der weiteren, insbesondere eines der hochaufgelösten Mikroskopie-Verfahren abgebildet wird, hinsichtlich Lage und Größe abhängig von Information aus einem der anderen Mikroskopie-Bilder zu wählen.

Das erfindungsgemäße Vorgehen erlaubt aber nicht nur die obige Kombination unterschiedlicher Mikroskopieverfahren zur Steigerung der Information über eine Probe, sondern auch eine Wechselwirkung der Mikroskopieverfahren hinsichtlich ihrer Durchführung untereinander. Dazu ist es möglich, in einem der Mikroskopiebilder vor der Kombinierung eine Bildauswertung vorzunehmen und daraus mindestens eine Steuergröße für die Aufnahme eines der anderen Mikroskopie-Bilder abzuleiten, also Steuergrößen für die Durchführung eines der anderen Mikroskopieverfahren. Als Steuergrößen sind möglich: Fokuslage, Probentischlage (d. h. Lage der Probe senkrecht zur optischen Achse des Objektivs), Objektivwahl, räumliche Verteilung einer Beleuchtungsstrahlung bei STD, ESA oder RESOLFT, Bildausschnittswahl Einstellung einer Kameraempfindlichkeit, lokale Beleuchtungsleistung einer Manipulationsstrahlung, welche zur Beeinflussung der Fluoreszenzeigenschaften der Probe eingebracht wird, Koordinatenübergabe bezüglich Bildausschnittlage etc.

Das erfindungsgemäße Kombinations-Mikroskop weist entsprechende Einrichtungen auf, so daß ein Anwender frei in der Kombination der geschilderten Mikroskopieverfahren ist, die dann als Betriebsmodi von der Steuereinrichtung am Kombinationsmikroskop eingestellt werden.

Insbesondere ist ein einfaches Einstellen dieser Betriebsmodi möglich, wenn die Beleuchtungsstrahlungen der einzelnen Module über aktivierbare Schaltmittel zusammengeführt sind. Diese Schaltmittel können Klapp- oder Einschwenkspiegel aufweisen, welche die jeweilige Beleuchtungsstrahlung in den Beleuchtungsstrahlengang einkoppeln, also den einen Teil-Beleuchtungsstrahlengang des Mikroskops realisierenden Beleuchtungsstrahlengang des jeweiligen Moduls an den, dann als Gesamtbeleuchtungsstrahlengang aufzufassenden Strahlengang ankoppeln.

Für den Detektionsstrahlengang ist es vorteilhaft, einen Strahlteiler vorzusehen, der in der Probe angeregte Fluoreszenzstrahlung zum Flächendetektor leitet und damit den Detektionsstrahlengang hinsichtlich der Weitfelddetektion abteilt. Um größtmögliche Freiheit bei der Ausführung der einzelnen Mikroskopieverfahren zu haben, ist es vorteilhaft, die einzelnen Klapp- oder Einschwenkspiegel sowie den Strahlteiler in Form von dichroitischen Strahlteilern auszuführen, die austauschbar sind, beispielsweise durch ein bekanntes Teilerrad oder mehrere solche Teilerräder. Bei geeigneter Wahl deren spektralen Eigenschaften können hierdurch die erwähnten Mikroskopieverfahren auch simultan realisiert werden, indem die Probe entsprechend simultan beleuchtet wird. Hinsichtlich des Laserscanningmoduls bzw. des Manipulationsbeleuchtungsstrahlungsmoduls findet z. B. ein Einkoppeln eines Punktscanners im Laserscanningmikroskop bzw. im Manipulationsbeleuchtungsstrahlungsmodul an einen Rest des Beleuchtungsstrahlengangs statt, der Weitfeld- oder Linienbeleuchtung führt. Somit ist es möglich, die entsprechenden Schaltmittel auch als achromatische Strahlteiler auszuführen, wie beispielsweise in der US 2008/0088920 beschrieben sind, deren Offenbarung hier diesbezüglich vollumfänglich einbezogen wird.

Für die Mikroskopieverfahren SIM, SLIM und SPEM ist eine Rotation der Modulation der strukturierten Beleuchtung erforderlich, wie eingangs bereits geschildert wurde. Die Rotation läßt sich besonders einfach realisieren, wenn dem Modulator, welcher zur Realisierung dieser Mikroskopieverfahren im gemeinsamen Abschnitt von zweiten und dritten Beleuchtungsstrahlengang liegt, ein Bildfeldrotator nachgeordnet ist. Dieser kann beispielsweise durch ein Abbe-König-Prisma realisiert sein. Dieser nachgeordnete Bildfeldrotator ist besonders vorteilhaft für das SLIM-Mikroskopieverfahren, da dann die senkrechte Lage von streifenförmiger Modulation und linienförmiger Beleuchtung nur einmal eingestellt werden muß und eine Nachführung, die ansonsten bei einer Rotation des Modulators erforderlich wäre, entfällt. Natürlich kann ach der Modulator selbst gedreht werden, z. B. durch ein drehbares Streifengitter oder einen geeignet angesteuerten Modulator (z. B. ein DMD oder LCD).

Das erfindungsgemäße Mikroskop ist besonders einfach aufgebaut, wenn die einzelnen Teil-Beleuchtungsstrahlengänge der Module kaskadenartig zu einem Gesamt-Beleuchtungsstrahlengang vereinigt werden, der dann am Strahlteiler für den Detektionsstrahlengang eingekoppelt wird. In den Gesamt-Beleuchtungsstrahlengang werden also an verschiedenen Stellen die einzelnen Teil-Beleuchtungsstrahlengänge eingekoppelt, bevorzugt durch die erwähnten Schaltmittel. Schaltmittel sind natürlich dann nicht erforderlich, wenn die Aktivierung bzw. Deaktivierung der einzelnen Teil-Beleuchtungsstrahlengänge anderweitig erfolgen kann, beispielsweise in den betroffenen Modulen selbst.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
Fig. 1 zeigt eine schematische Darstellung eines Kombinationsmikroskops,
Fig. 2 zeigt schematisch die Überlagerung verschiedener Bilder, die mit dem Kombinationsmikroskop der Fig. 1 gewonnen wurden,
Fig. 3 zeigt eine Schemadarstellung zur Steuerung des Kombinationsmikroskops der Fig. 1 und
Fig. 4 zeigt ein weiteres Kombinationsmikroskop ähnlich dem der Fig. 1.

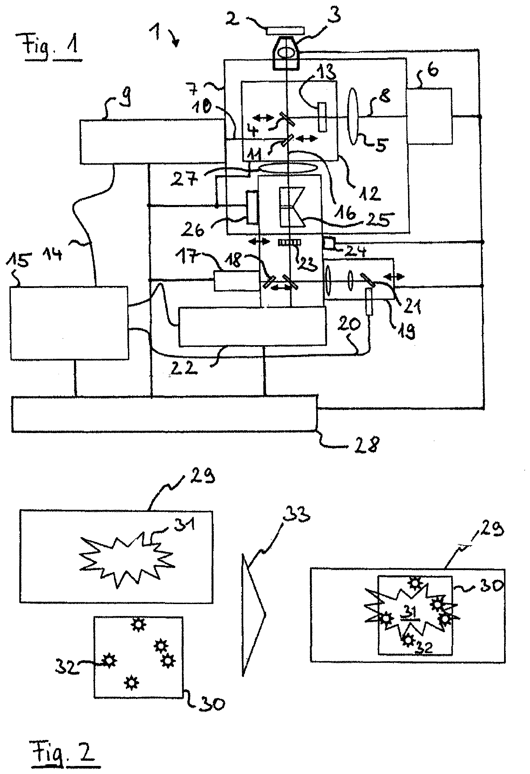

In Fig. 1 ist ein Mikroskop 1 dargestellt, das klassische Mikroskopieverfahren, d. h. Mikroskopieverfahren deren Auflösung beugungsbegrenzt ist, mit hochauflösenden Mikroskopieverfahren simultan ausführen kann, d. h. mit Mikroskopieverfahren deren Auflösung über die Beugungsgrenze hinaus gesteigert ist. Das Mikroskop 1 ist modular aufgebaut, und zur besseren Erläuterung der Erfindung wird es in einer umfangreichen Ausbaustufe beschrieben. Es ist aber auch eine reduzierte Bauweise mit weniger Modulen möglich. Auch ist der modulare Aufbau auch nicht zwingend; eine einteilige oder nicht-modulare Bauform ist ebenfalls möglich. Das Mikroskop 1 dieses Beispiels der Fig. 1 ist auf Basis eines herkömmlichen Laser-Scanning-Mikroskops aufgebaut und erfaßt eine Probe 2.

Es weist ein Objektiv 3 auf, durch das die Strahlung für alle Mikroskopieverfahren läuft. Das Objektiv 3 bildet über einen Strahlteiler 4 die Probe zusammen mit einer Tubuslinse 5 auf einen CCD-Detektor 6 ab, der ein Beispiel für einen allgemein möglichen Flächendetektor ist. Insofern verfügt das Mikroskop 1 über ein herkömmliches Lichtmikroskopmodul 7, und der Strahlengang von der Probe 2 durch das Objektiv 3 und die Tubuslinse 5 zum CCD-Detektor 6 entspricht einem herkömmlichen Weitfeld-Detektionsstrahlengang 8. Der Strahlteiler 4 ist, wie durch den Doppelpfeil in Fig. 1 angedeutet, austauschbar, um zwischen Strahlteilern mit verschiedenen dichroitischen Eigenschaften bzw. achromatischen Strahlteilern gemäß US 2008/0088920 wechseln zu können.

In den Strahlengang zum Objektiv 3 ist weiter ein Laser-Scanning-Modul 9 angebunden, dessen LSM-Beleuchtungs- und Detektionsstrahlengang über einen Schaltspiegel 11, der ebenfalls Strahlteilerfunktionen hat, in den Strahlengang zum Objektiv 3 eingekoppelt ist. Der Strahlengang vom Schaltspiegel 11 zum Objektiv 3 durch den Strahlteiler 4 ist also ein Strahlengang, in dem Beleuchtungsstrahlengang und Detektionsstrahlengang vereint sind. Dies gilt sowohl hinsichtlich des Laser-Scanning-Moduls 9 also auch hinsichtlich des Weitfeld-Detektionsstrahlengangs 8, da, wie noch zu erläutern sein wird, am Schaltspiegel 11 auch Beleuchtungsstrahlung eingekoppelt wird, die zusammen mit dem Weitfeld-Detektionsstrahlengang 8, d. h. dem CCD-Detektor 6, Mikroskopieverfahren realisiert.

Der Schaltspiegel 11 und der Strahlteiler 4 sind zu einem Strahlteilermodul 12 zusammengefaßt, wodurch die Möglichkeit besteht, den Schaltspiegel 11 und den Strahlteiler 4 anwendungsabhängig zu wechseln. Dies ist durch Doppelpfeile veranschaulicht. Weiter ist im Strahlteilermodul 12 ein Emissionsfilter 13 vorgesehen, das im Weitfeld-Detektionsstrahlengang 8 liegt und die spektralen Anteile, welche durch den Weitfeld-Detektionsstrahlengang 8 propagieren können, geeignet filtert. Natürlich ist auch das Emissionsfilter 13 im Strahlteilermodul 12 austauschbar.

Das Laser-Scanning-Modul 9 erhält für den Betrieb erforderliche Laserstrahlung über eine Lichtleitfaser 14 von einem Lasermodul 15.

In der in Fig. 1 dargestellten Bauweise wird am Strahlteilermodul 12, genauer am Schaltspiegel 14, ein Sammel-Beleuchtungsstrahlengang 16 eingekoppelt, durch den Beleuchtungsstrahlung für verschiedene Mikroskopieverfahren läuft. In diesen Sammel-Beleuchtungsstrahlengang 16 sind verschiedene Teil-Beleuchtungsstrahlengänge einzelner Beleuchtungsmodule eingekoppelt. Beispielsweise koppelt ein Weitfeldbeleuchtungsmodul 17 über einen Schaltspiegel 18 Weitfeldbeleuchtungsstrahlung in den Sammel-Beleuchtungsstrahlengang 16, so daß über eine Tubuslinse 27 und das Objektiv 3 die Probe 2 weitfeldbeleuchtet wird. Das Weitfeldbeleuchtungsmodul kann beispielsweise eine HBO-Lampe aufweisen. Als weiteres Beleuchtungsmodul ist ein TIRF-Beleuchtungsmodul 19 vorgesehen, das bei geeigneter Stellung des Schaltspiegels 18 eine TIRF-Beleuchtung realisiert. Das TIRF-Beleuchtungsmodul 19 erhält dazu Strahlung von Lasermodul 15 über eine Lichtleitfaser 20. Das TIRF-Beleuchtungsmodul 19 weist einen Spiegel 21 auf, der längsverschieblich ist. Durch die Längsverschiebung wird der Beleuchtungsstrahl, der vom TIRF-Beleuchtungsmodul 19 abgegeben wird, senkrecht zur Hauptausbreitungsrichtung des abgegebenen Beleuchtungsstrahls verschoben, wodurch im Ergebnis am Objektiv 3 die TIRF-Beleuchtung unter einem einstellbaren Winkel zur optischen Achse des Objektivs 3 einfällt. Auf diese Weise kann einfach der nötige Winkel der Totalreflexion am Deckglas sichergestellt werden. Natürlich sind auch andere Mittel geeignet, um diese Winkelverstellung zu bewirken. Auch kann das TIRF-Beleuchtungsmodul 19 als Weitfeldbeleuchtungsquelle arbeiten, indem der Spiegel 21 so eingestellt wird, daß der Beleuchtungsstrahl auf der optischen Achse einfällt.

Weiter ist an dem Sammel-Beleuchtungsstrahlengang der Beleuchtungsstrahlengang eines Manipulatormoduls 22 angekoppelt, das ebenfalls über eine nicht näher bezeichnete Lichtleitfaser Strahlung vom Lasermodul 15 erhält und eine punkt- oder linienförmige Strahlverteilung scannend über die Probe 2 führt. Das Manipulatormodul 22 entspricht also im wesentlichen dem Beleuchtungsmodul eines Laserscanningmikroskops, und demzufolge kann das Manipulatormodul 22 auch mit dem Detektor des Laser-Scanning-Moduls 9 oder der Weitfeld-Detektion durch den CCD-Detektor 6 kombiniert betrieben werden.

Im Sammel-Beleuchtungsstrahlengang 16 ist weiter als Strahlungsmodulator ein Streifengitter 23 vorgesehen, das in einer Zwischenbildebene des Beleuchtungsstrahlenganges liegt und dessen Gitterkonstante unterhalb der Grenzfrequenz liegt, die mit dem Mikroskop 1 in die Probe 2 übertragen werden kann. Das Gitter 23 bewirkt eine streifenförmige Modulation der auf es einfallenden Beleuchtungsstrahlung. Das Gitter 23 ist quer zur optischen Achse des Sammel-Beleuchtungsstrahlengangs 16 verschieblich und kann auch aus dem Strahlengang herausgeschwenkt werden. Hierzu ist ein entsprechender Verschiebeantrieb 24 vorgesehen.

In Beleuchtungsrichtung dem Gitter nachgeordnet sitzt im Sammel-Beleuchtungsstrahlengang 16 weiter ein Bildfeldrotator 25, der von einem Rotatorantrieb 26 gedreht wird. Bei dem Bildfeldrotator kann es sich beispielsweise um ein Abbe-König-Prisma handeln.

Die Module und Antriebe sowie Detektoren des Mikroskops 1 sind alle über nicht näher bezeichnete Leitungen mit einer Steuereinrichtung 28 verbunden. Diese Verbindung kann beispielsweise über einen Daten- und Steuerbus erfolgen. Die Steuereinrichtung 28 steuert das Mikroskop 1 in verschiedene Betriebsmodi.

Das Steuergerät 28 ist ausgebildet, um am Mikroskop 1 klassische Mikroskopie, d. h. Weitfeldmikroskopie (WF), Laserscanningmikroskopie (LSM) und auch Fluoreszenzmikroskopie mit totaler interner Reflexion (TIRF) auszuführen und diese mit hochauflösenden Mikroskopieverfahren, wie in den eingangs erwähnten PAL-M, SIM, SLIM, SPEM, STED, RESOLFT, zu kombinieren und auch diese untereinander zu kombinieren. Das Mikroskop 1 der Fig. 1 weist im wesentlichen zwei zum Laserscannerbeleuchten geeignete Module auf, nämlich das Laserscanningmodul 9 sowie das Manipulatormodul 22. Natürlich sind auch andere Kombinationen möglich. Diese Module sind über Tubuslinsen mit dem Objektiv 3 auf die Probe 2 gekoppelt. Das Manipulatormodul 22 beinhaltet lediglich den Anregungsteil eines Laserscanningmoduls, also ohne Detektion. Dadurch kann die Probe punktförmig beleuchtet und der Beleuchtungsspot über die Probe 2 gerastert werden. Vorzugsweise befindet sich im Manipulatormodul 22 auch eine Umschalteinheit, z. B. eine Umschaltlinse oder Zylinderlinse, mit welcher eine Umschaltung zwischen einer punktförmigen und einer linienförmigen Beleuchtung erfolgt. Diese linienförmige Beleuchtung ist besonders dann vorteilhaft, wenn das Gitter 23, welches sich in einem Zwischenbild des Sammel-Beleuchtungsstrahlengangs 16 befindet, eingeschwenkt ist und senkrecht zur Linie der linienförmigen Beleuchtung liegt. Dann kann mittels des Manipulatormoduls 22 auf einfache Weise das SLIM-Mikroskopieverfahren realisiert werden.

Alternativ zum Gitter 23 kann auch ein variabel einstellbarer Streifenmodulator oder ein DMD zur Erzeugung einer strukturierten Beleuchtung in der Probe 2 eingesetzt werden. Dann ist natürlich der Verschiebeantrieb 24 sowie die Ein-/Ausschwenkbarkeit des Gitters 23 nicht mehr erforderlich.

Der Bildfeldrotator 25 erlaubt es, die strukturierte Beleuchtung, die durch das Gitter 23 (oder die dieses ersetzende Elemente) erzeugt werden, um die optische Achse des Sammel-Beleuchtungsstrahlenganges 16 zu drehen, so daß die strukturierte Beleuchtung in verschiedenen Winkeln in der Probe 2 liegt. Somit kann durch Betrieb des Manipulatormoduls 22 oder des Weitfeldbeleuchtungsmoduls 17, jeweils in Kombination mit geeigneter Verstellung des Gitters 23 durch das Steuergerät 28 SIM-, SLIM- oder SPEM-Mikroskopie mit dem Mikroskop 1 ausgeführt werden. Natürlich ist der Schaltspiegel 18 dann in die geeignete Stellung zu bringen.

Bei ausgeschwenktem Gitter 23 kann eine klassische Weitfeldbeleuchtung durch das Weitfeldbeleuchtungsmodul 17 bzw. eine klassische TIRF-Beleuchtung durch das TIRF-Beleuchtungsmodul 19 erfolgen.

Zur Umschaltung zwischen den einzelnen Betriebsarten werden die Schaltspiegel 18 und 11 sowie der Strahlteiler 4 geeignet eingestellt. Hierzu können in der Realisierung Klapp- oder Einschenkspiegel verwendet werden, so daß eine Umschaltung zwischen den Betriebsarten sequentiell erfolgen kann. Alternativ sind auch dichroitische Spiegel möglich, welche einen gleichzeitigen Betrieb der verschiedenen Module ermöglichen.

Der Strahlteiler 4 ist vorzugsweise als dichroitischer Strahlteiler ausgeführt, dessen Spektraleigenschaften so einstellbar sind, daß Spektralanteile von Fluoreszenzemission von Markierungsmolekülen, die mit Hilfe des CCD-Detektors 6 detektiert werden sollen, in den Weitfeld-Detektionsstrahlengang 8 gelangen und die übrigen Spektralkomponenten möglichst transmittiert werden. Zur Erhöhung der Flexibilität bezüglich der Verwendbarkeit von Markierungsmolekülen mit verschiedenen Emissionscharakteristiken sind im Strahlteilermodul 12 mehrere verschiedene Strahlteiler 4 und Emissionsfilter 13 austauschbar angeordnet, z. B. auf einem Filterrad.

Im folgenden wird beispielhaft die Kombination von LSM und PAL-M unter der Verwendung von dichroitischen Strahlteilern bzw. Schaltspiegeln 4, 11 und 18 beschrieben. Beispielsweise wird die Probe 2 mit einer Alexa 543-Markierung versehen, die bei einer Wellenlänge von 543 nm anregbar ist und Fluoreszenzstrahlung oberhalb von 550 nm absendet. Für die PAL-Mikroskopie wird eine EOS-FP-Markierung verwendet, die mit Strahlung von 405 nm aktiviert werden kann, bei 488 nm anregbar ist und deren Fluoreszenzstrahlung im Bereich zwischen 490 und 540 nm detektiert wird. Für diese Betriebsart wird das Gitter 23 ausgeschwenkt und das TIRF-Beleuchtungsmodul 19 wird so eingestellt, daß TIRF-Beleuchtung mit 488 nm erfolgt. Die Aktivierung des Markierungsstoffes EOS-FP erfolgt mit Hilfe des Manipulatormoduls 22, der hierzu die Probe 2 mit Laserstrahlung von 405 nm beleuchtet. Für die einzelnen Strahlteiler bzw. Schaltspiegel werden folgende Parameter eingestellt.

| *Element* | *4* | *11* | *18* | *13* |
|---|---|---|---|---|
| Transmission | < 490; > 550 | < 540 | < 480 | 490 - 550 |
| Reflexion | 490 - 550 | > 540 | > 480 | |

Alle oben angegebenen Wellenlängenangaben sind in nm.

In einer weiteren Betriebsart wird SIM mit PAL-M kombiniert, wobei die Bildaufnahme sequentiell erfolgt. Dazu wird die Probe 2 beispielsweise mit einer DAPI-Markierungsstoff versehen, welcher bei 405 nm anregbar ist und dessen Fluoreszenzstrahlung zwischen 420 und 520 nm liegt. Für das PAL-M-Verfahren wird eine tdEOS-Markierung der Probe verwendet, welche bei 488 nm aktivierbar ist, bei 561 nm anregbar und oberhalb 565 nm detektierbar ist. Die Aktivierung dieses Markierungsstoffes erfolgt über das TIRF-Beleuchtungsmodul 19. Für die Aufnahme des PAL-M-Bildes wird das Gitter 23 ausgeschwenkt und das TIRF-Beleuchtungsmodul 19 aktiviert. Zur Aufnahme des SIM-Bildes wird das Gitter 23 eingeschwenkt und die Probe aus dem Weitfeldbeleuchtungsmodul 17 weitfeldbeleuchtet. Die Strahlteiler/Schaltspiegel sind dann wie folgt eingestellt:

| *Element* | | *4* | *11* | *18* | *13* |
|---|---|---|---|---|---|
| SIM | Transmission | < 565 | Ausgeschwenkt | Spiegel | > 565 |
| | Reflexion | > 565 | | | |
| PAL-M | Transmission | < 420 | | | > 420 |
| | Reflexion | > 420 | | | |

Alle oben angegebenen Wellenlängenangaben sind in nm.

Abb. 2 zeigt schematisch die Überlagerung der verschiedenen Mikroskopie-Bilder, die mit Hilfe des Kombinations-Mikroskops 1 der Fig. 1 gewonnen werden. Das Mikroskopie-Bild 29 stammt dabei aus einem klassischen Mikroskopieverfahren, beispielsweise aus normaler Fluoreszenzmikroskopie unter Verwendung der Weitfeld-Beleuchtungsquelle 17 und der Weitfeld-Detektion. Das Mikroskopie-Bild 30 stammt hingegeben aus einem hochauflösenden Verfahren, beispielsweise einer SIM- oder PAL-Mikroskopie. Fig. 2 verdeutlicht, daß das hochauflösende Bild 30 ein sehr viel kleineres Objektfeld der Probe 2 abdeckt, als das Mikroskopie-Bild 29. Im Mikroskopie-Bild 29 finden sich Strukturen 31; Strukturen 32 sind im hochauflösenden Mikroskopie-Bild 30 vorhanden. Das Steuergerät 28 überlagert nun in einem durch einen Pfeil symbolisierten Überlagerungsvorgang 33 die jeweiligen Bilder zu einem Gesamtbild. Die Überlagerung kann zweidimensional, dreidimensional und für beide Varianten auch jeweils über die Zeit erfolgen. Fig. 2 zeigt exemplarisch eine zweidimensionale Darstellung. Fig. 2 ist weiter schematisch dafür, daß ein höher aufgelöstes Mikroskopie-Bild 30 mit einem niedriger aufgelösten Mikroskopie-Bild 29 kombiniert wird, d. h. daß die Kombination zweier unterschiedlich auflösender Mikroskopieverfahren zu einem Gesamtbild führen. Zu erkennen ist in Fig. 2, daß erst mit Hilfe des niedriger aufgelösten Mikroskopie-Bildes 29 ein Zusammenhang zwischen den hoch aufgelösten Details des höher aufgelösten Mikroskopie-Bildes 30 hergestellt werden kann.

Das Mikroskopie-Bild 29 kann beispielsweise mittels SIM oder LSM erzeugt werden, wobei Markierungsmoleküle einer ersten Art zur Bildgebung beitragen, z. B. FITC oder Alexa. Das höher aufgelöste Bild kann beispielsweise aus PAL-Mikroskopie stammen und liefert Detailinformationen eines anderen Markierungsfarbstoffes, z. B. DRONPA. Der Überlagerungsvorgang erlaubt es, im zusammengesetzten Bild teilweise komplementäre Informationen der Verfahren zu kombinieren. Beispielsweise mißt ein PAL-M mit TIRF-Beleuchtung nur Informationen an der Grenzfläche zum Deckglas der Probe 2. Wird parallel ein LSM-Mikroskopie-Bild aufgenommen, so kann aufgrund der höheren Eindringtiefe auch Information aus anderen Probenebenen gewonnen werden, und man kann diese mit dem hochaufgelösten Mikroskopie-Bild und dessen Detailinformationen in Zusammenhang bringen.

Unter Steuerung des Steuergerätes 28 ist es somit möglich, bestimmte Abläufe hochaufgelöst, z. B. an Membranen, zu studieren und gleichzeitig in Bezug zu anderen Vorgängen, z. B. innerhalb einer Zelle oder eines Zellverbandes, zu setzen. Da die Bildaufnahmerate bei hochaufgelösten Verfahren geringer ist, als bei niedriger aufgelösten oder klassisch auflösenden Verfahren, sind dynamische Prozesse mit hochaufgelösten Verfahren nicht oder nur eingeschränkt untersuchbar. Es sind deshalb auch bestimmte Fixierungen der Probe 2 bekannt, um eine Verschiebung der Probe oder Diffusionen in der Probe 2 zu unterbinden. Mit Hilfe des Mikroskops 1 können nun zuerst dynamische Verläufe in der Probe 2 mittels Mikroskopieverfahren, die eine vergleichsweise geringere Auflösung haben, aber dafür schneller sind, untersucht werden, und beim Auftreten eines bestimmten Ereignisses in der Probe 2, das sich z. B. durch ein vorbestimmtes Muster im entsprechend erzeugten Mikroskopie-Bild zeigt, die Probe 2 fixiert und hochaufgelöst vermessen werden. Es ist dazu bevorzugt, Probenfixierungseinrichtungen in das Mikroskop 2 zu integrieren, beispielsweise eine Einrichtung zum Auftropfen einer Fixierlösung oder zum Schockgefrieren der Probe 2. Auch können lebende Zellen in einem Ruhezustand hochauflösend untersucht werden und dann durch optische (z. B. mittels des Manipulatormoduls 22), chemische oder andere Stimuli schnelle dynamische Prozesse injiziert und diese mit niederer aufgelösten Mikroskopieverfahren beobachtet werden (z. B. mit LSM oder WF). Diese Beobachtungsfolge (hochauflösende Mikroskopie eines Ruhezustandes - Stimulierung eines dynamischen Prozesses - niederere Auflösung der sich einstellenden dynamischen Veränderung) kann bei Bedarf auch zyklisch wiederholt werden. Die Mikroskopie-Bilder werden in einer Ausführungsform von der Steuereinrichtung 28 in einem vierdimensionalen Komposit-Bild überlagert dargestellt.

Werden simultan klassische Verfahren (LSM und WF) und hochauflösende Verfahren (SIM, SLIM, STEM, PAL-M, STED, RESOLFT) verwendet, so kann man beispielsweise Teilbereiche der Probe 2, in denen schnelle Veränderungen zu erwarten sind, mit niedriger Auflösung und höherer Bildfrequenz und statische Teilbereiche in der Probe 2 hochaufgelöst und mit niedrigerer Bildfrequenz aufnehmen. Die Kombinationen der Mikroskopieverfahren können also auch in der Probe gleichzeitig stattfinden und insbesondere unterschiedliche Ausschnitte des Objektfeldes in der Probe 2 erfassen. Ein Beispiel hierfür ist die Markierung von statischen Zellmembranen mit EOS-FP und deren Vermessung mittels PAL-M und die gleichzeitige Rhodamin-Färbung von Zell-Vesikeln und deren Darstellung mittels eines konfokalen Linienscanners (linienscannendes LSM). Im Komposit-Bild erscheinen dann die Vesikel mit hoher Zeitauflösung (z. B. 200 nm räumliche und 10 ms zeitliche Auflösung) vor einer hochaufgelösten Zellmembran (z. B. 20 nm Auflösung). Bei der Überlagerung der Bilder kann dabei grundsätzlich ein Abgleich bzw. eine Justierung der einzelnen Mikroskopie-Bilder 29 und 30 erfolgen, indem die Struktur 32 des höher aufgelösten Bildes 30 zu passenden Strukturen 31 des niederer aufgelösten Bildes 29 bei der Überlagerung passen ausgerichtet werden. Hierzu können auch sogenannte Justierstrukturen in die Probe 2 eingebracht werden, z. B. fluoreszierende Goldpartikel. Anhand dieser Justierstrukturen erfolgt dann die Lagejustierung der Mikroskopie-Bilder vor deren Überlagerung zum Komposit-Bild.

Soweit hier die Überlagerung von zwei Mikroskopie-Bildern beschrieben wird, ist dies natürlich rein beispielhaft zu verstehen. Natürlich kann auch eine größere Anzahl an Bildern überlagert werden.

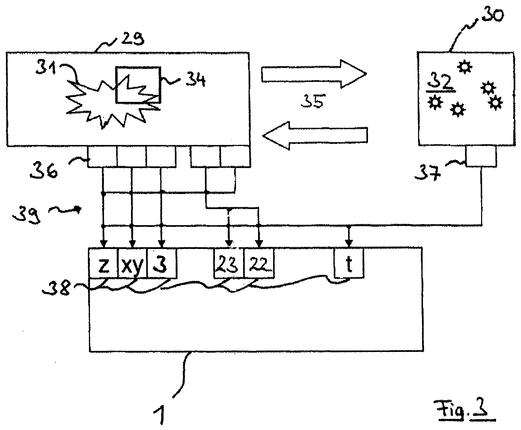

Die sequentiell oder simultan ausgeführten, verschiedenen Mikroskopieverfahren erlauben aber nicht nur eine gesteigerte Bildinformation, sondern auch eine Verbesserung der Bildaufnahmebedingungen eines Mikroskopieverfahrens unter Hinzuziehung von Information aus einem weiteren Mikroskopieverfahren. Abb. 3 zeigt schematisch einen Regelkreis, in dem Information aus einem geringer aufgelösten Mikroskopie-Bild 29 und/oder Information aus einem höher aufgelösten Mikroskopie-Bild 30 zu einer Beeinflussung 35 ausgenützt werden. Die Auswertung des niederer aufgelösten Mikroskopie-Bildes 29 kann dabei im gesamtem Bild oder auch in einem Bildausschnitt 34 erfolgen, beispielsweise einem Bildausschnitt 34, der dem Objektfeld, das im höher aufgelösten Mikroskopie-Bild 30 abgebildet ist, entspricht. In einem oder beiden der Mikroskopie-Bilder findet eine Merkmalsanalyse 36 bzw. 37 statt, die in Fig. 3 schematisch abgedeutet ist. Aus dieser Merkmalsanalyse werden Stellgrößen für den Betrieb des Mikroskops 1 abgeleitet, wobei die Auswirkungen 39 auf Steuergrößen 38 des Mikroskops 1 auch eine Querbeeinflussung dahingehend zur Folge haben können, daß aus dem nieder aufgelösten Mikroskopie-Bild 29 Änderungen von Steuergrößen 38 abgeleitet werden, die sich auf die Aufnahme des höher aufgelösten Mikroskopie-Bildes 30 auswirken und umgekehrt. Beispielsweise kann aus dem nieder aufgelösten Mikroskopie-Bild 29 der Kontrast ermittelt werden und daraus eine Korrektur der Fokuslage z erfolgen. Aus einer Ermittlung der Position einer Struktur der Probe 2 kann eine Korrektur einer Probendrift xy erfolgen.

Größen von Strukturen können dazu verwendet werden, das Objektiv 3 entsprechend zu wählen. Eine Helligkeitsanalyse der Probe und damit eine Analyse einer Farbstoffkonzentration kann dazu verwendet werden, ein passendes Gitter 23 auszuwählen oder die Beleuchtungsleistung des Manipulators 22 einzustellen. Auch kann eine SLIM-Beleuchtung realisiert oder die Empfindlichkeit des CCD-Detektors 22 oder einer Kamera, die den Flächendetektor der Weitfeld-Detektion realisiert, geregelt werden.

Die Festlegung eines interessierenden Bildausschnittes 34 kann ebenfalls zur Einstellung der lokalen Beleuchtungsleistung des Manipulatormoduls 22 verwendet werden. Auch kann eine Koordinatenübergabe x, y, z erfolgen, um das Bildfeld 34 für das hoch auflösende Mikroskopie-Bild 29 zu erfassen oder vorzugeben.

Aus dem höher auflösenden Mikroskopie-Bild 30 kann wiederum ein Struktur analysiert werden und eine entsprechende Zusatzabbildung durch das niederer auflösende Mikroskopie-Bild 30 erfolgen oder die Probe durch das Manipulatormodul 22 an geeigneten Stellen mit Strahlung zur Manipulation der Fluoreszenzeigenschaften angeregt werden.

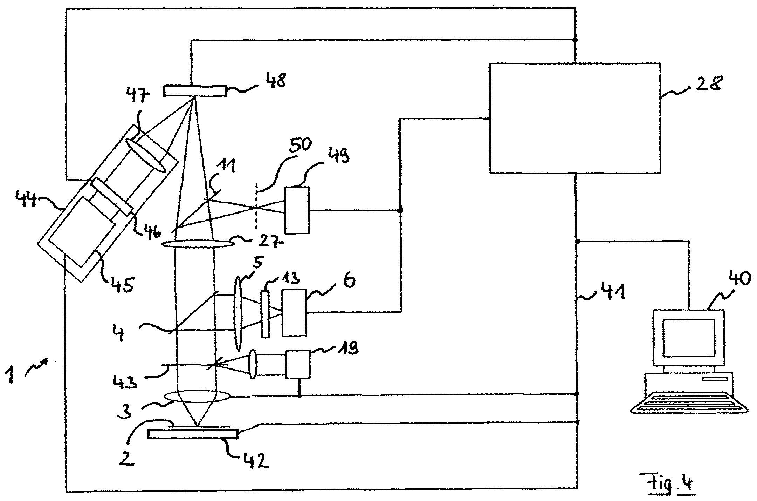

Fig. 4 zeigt schematisch eine weitere Ausführungsform des Kombinations-Mikroskops 1, wobei bereits geschilderte Module mit den gleichen Bezugszeichen versehen sind und deshalb hier nicht noch einmal erläutert werden müssen. Darauf hingewiesen sei aber, daß die Anordnung der einzelnen Module, insbesondere des Laser-Scanning-Moduls 9, des Manipulatormoduls 22, des Weitfeldbeleuchtungsmoduls 17 sowie des TIRF-Moduls 19 auch an anderen Stellen in dem Beleuchtungsstrahlengang bzw. dem Beleuchtungs- und Detektionsstrahlengang erfolgen werden kann. In Fig. 4 ist dies exemplarisch für das TIRF-Modul 19 gezeigt, das nun zwischen dem Strahlteiler 4 und dem Objektiv 3 in einer Pupille 43 die entsprechende Beleuchtungsstrahlung einkoppelt.

Weiter ist in Fig. 4 exemplarisch eine Anzeige 40 bzw. ein entsprechender Computer mit Anzeige 40 dargestellt, der ebenfalls an ein Daten- und Steuernetzwerk 41 angeschlossen ist, über das die Steuereinrichtung 28 mit den einzelnen Modulen des Kombinations-Mikroskops 1 verbunden ist.

Auch ist in Fig. 4 ein Probentisch 42 dargestellt, auf dem die Probe 2 unter Steuerung der Steuereinrichtung 28 verschieblich ist. Ein solcher Probentisch ist natürlich, wie alle anderen Details der Fig. 4 auch, auch im Mikroskop der Fig. 1 möglich.

Das Laser-Scanning-Modul 9 der Fig. 1 ist in Fig. 4 mit mehreren Komponenten gezeigt. Eine Lasereinrichtung 44 umfaßt einen Laser 45, der einen von der Steuereinrichtung 28 angesteuerten Phasenmodulator 46 beaufschlagt. Eine Optik 47 bündelt die Strahlung dann auf ein DMD 48. Für den Detektionszweig des LSM-Moduls 9 ist in Fig. 4 exemplarisch ein LSM-Detektor 49 sowie eine in einer Zwischenbildebene 50 befindliche, konfokale Blende eingezeichnet.

Mit Hilfe des Kombinations-Mikroskops 1 der Fig. 1 oder 4 ist es möglich, sequentiell oder simultan LSM-Mikroskopie-Bilder und PAL-M-Mikroskopie-Bilder aufzuzeichnen und die Aufnahme der PAL-M-Mikroskopie-Bilder online mittels Informationen, die aus dem LSM-Mikroskopie-Bild gewonnen wurden, zu regeln.

Hierzu wird in einem ersten Schritt ein LSM-Bild der Probe 2 aufgezeichnet und auf dem Bildschirm 40 dargestellt. Regionen besonderen Interesses (ROI) können nun aus einem Mirkoskopie-Bild von einem Nutzer selbst, vom Computer unterstützt oder automatisch ausgewählt werden und die Steuerung der Aktivierungsstrahlung aus dem Lasermodul 44 wird entsprechend beeinflußt. Hierzu wird das DMD 48 eingesetzt, das vollflächig von Laserstrahlung des Lasers 45 ausgeleuchtet ist. Die einzelnen Spiegel des DMD werden nun so gestellt, daß nur die ausgewählten ROI beleuchtet und damit nur in diesen Regionen eine optische Aktivierung des Farbstoffes (z. B. DRONPA oder EOS-FP) durchgeführt wird. Die restlichen Spiegel des DMD verbleiben in einer ausgeschalteten Position, und die darauf geleitete Strahlung wird in einer (nicht dargestellten) Strahlfalle absorbiert. Natürlich können die eingeschalteten Spiegel auch zeitmoduliert werden, um die Aktivierungsleistung kontinuierlich abzuschwächen. Hierdurch kann, für das PAL-Verfahren besonders vorteilhaft, die Aktivierungsleistung effizient an die Molekülkonzentration angepaßt werden, so daß sich unabhängig von der lokalen Markierungskonzentration die aktivierten Moleküle in einem Abstand größer als die optische Auflösung des Mikroskops 1 befinden. Damit kann die Probe 2 besonders schnell vermessen werden, insbesondere da durch die zuvor aus dem nieder aufgelösten Mikroskopie-Bild bekannte oder gleichzeitig dazu im nieder aufgelösten Mikroskopie-Bild ermittelte Konzentration der Moleküle in der Probe die Aktivierung passend eingestellt werden kann. Eine lokale Einstellung ist besonders vorteilhaft, wenn starke lokale Konzentrationsänderungen auftreten, z. B. helle Bereiche neben schwach gefärbten Bereichen vorhanden sind. Weiter kann lokal unterschiedliches Ausbleichen von Markierungsstoffen, welche z. B. aufgrund von Strukturvariationen in der Probe 2 auftreten kann, zu lokalen Konzentrationsänderungen führen, die nun mit der Aktivierungsregelung besonders vorteilhaft ausgeglichen werden können.

Alternativ oder zusätzlich kann bei einer Aktivierung in vordefinierten ROI mittels des Phasenmodulators 46 das ROI-Muster vorgeformt auf die gesamte DMD 48 abgebildet werden, welche dann nur noch eine Feinabstimmung vornimmt. So wird die Leistung des Lasers 45 nahezu vollständig zur Aktivierung von Markierungsmolekülen in der Probe 2 eingesetzt. Der Phasenmodulator 46 ist dazu in einer Pupillenebene vor der DMD 48 (vom Laser 45 aus betrachtet) angeordnet und befindet sich im Abstand der Brennweite s der Optik 47 (die auch durch eine Linse realisiert werden kann). Das DMD 48 ist wiederum im Abstand f nach der Optik 47 lokalisiert. Alternativ kann man auch auf die DMD 48 verzichten, wenn beispielsweise die ROI-Auswahl durch den Phasenmodulator 46 erfolgt und die Intensität der Laserquelle 45 global geregelt wird, z. B. durch einen dem Laser nachgeschalteten Intensitätsmodulator oder eine direkte Intensitätsmodulation des Lasers 45.

Soweit hier Kombinationen oder Auswertungen von Mikroskopie-Bildern erläutert wurden, sind diese rein beispielhaft und nicht als Festlegung auf das den genannten Bildern zugrundeliegende Mikroskopieverfahren zu verstehen. Vielmehr können die geschilderten Auswertungen, Kombinationen, Steuerungsbeeinflussungen etc. auch bei anderen der genannten Mikroskopieverfahren zum Einsatz kommen.

## Patentansprüche

1. Verfahren zum Erzeugen eines Bildes einer Probe mittels Mikroskopieverfahren, die unterschiedliche Ortsauflösungen realisieren, wobei mindestens zwei der folgenden Mikroskopieverfahren kombiniert werden:
- ein erstes Mikroskopieverfahren, in dem die Probe durch strukturierte Linien- oder Weitfeldbeleuchtung zur Lumineszenz angeregt wird, die Strukturierung gedreht und für jede Drehstellung mehrmals verschoben wird, wobei mindestens drei Drehlagen und pro Drehlage mindestens drei Verschiebelagen realisiert werden, jeweils die lumineszierende Probe mit einer vorbestimmten optischen Auflösung auf einen Flächendetektor abgebildet wird und aus den so erhaltenden Bildern durch eine Fourieranalyse umfassende rechnerische Bearbeitung ein erstes Mikroskopie-Bild mit über die vorbestimmte optische Auflösung hinaus gesteigerter Ortsauflösung erzeugt wird,
- ein zweites Mikroskopieverfahren, in dem die Probe mit Markierungsmolekülen markiert wird, welche mit einem Umschaltsignal aktivierbar sind, so daß sie erst dann zur Abgabe bestimmter Lumineszenzstrahlung anregbar sind, das Umschaltsignals auf die Probe derart aufgebracht wird, daß nur eine Teilmenge der in der Probe vorhandenen Markierungsmoleküle aktiviert werden, wobei in der Probe Teilbereiche bestehen, in denen aktivierte Markierungsmoleküle zu den ihnen nächst benachbarten aktivierten Markierungsmoleküle einen Abstand haben, der größer oder gleich der vorbestimmten optischen Auflösung ist, die aktivierten Moleküle zur Abgabe von Lumineszenzstrahlung angeregt werden, die Lumineszenzstrahlung abgebende Probe mit der vorbestimmten optischen Auflösung auf den Flächendetektor abgebildet wird, das Bild analysiert wird und daraus Bilddaten erzeugt werden, welche die geometrischen Orte der Lumineszenzstrahlung abgebenden Markierungsmoleküle mit einer über die optische Auflösung gesteigerten Ortsauflösung angeben, und aus den Bilddaten ein zweites Mikroskopie-Bild erzeugt wird,
- ein drittes Mikroskopieverfahren zur Erzeugung eines dritten Mikroskopie-Bildes mittels Laserscanningmikroskopie, und
- ein viertes Mikroskopieverfahren, bei dem die Probe mit zur STED-Technik geeigneten Markierungsmolekülen markiert wird und mittels STED-Mikroskopie ein viertes Mikroskopie-Bild erzeugt wird,
- wobei die mindestens zwei erhaltenen Mikroskopie-Bilder zu einem Komposit-Bild kombiniert werden, insbesondere überlagert werden.

2. Verfahren nach Anspruch 1, wobei alle vier Mikroskopieverfahren ausgeführt werden und die vier Mikroskopie-Bilder zum Komposit-Bild kombiniert werden.

3. Verfahren nach Anspruch 1, wobei auch ein fünftes Mikroskopieverfahren ausgeführt wird, bei dem die Probe mit zur ESA- oder RESOLFT-Technik geeigneten Markierungsmolekülen markiert wird, und mittels ESA oder RESOLFT ein fünftes Mikroskopie-Bild erzeugt und mit zum Komposit-Bild kombiniert wird.

4. Verfahren nach Anspruch 1, wobei in einem ersten Schritt mit dem ersten bis viertem Mikroskopieverfahren ein entsprechendes Mikroskopie-Bild der Probe erzeugt wird, dieses in einem zweiten Schritt auf ein vorbestimmtes Muster durchsucht wird und bei Auffinden des vorbestimmten Musters in einem dritten Schritt mit mindestens einem der anderen der ersten bis vierten Mikroskopieverfahren ein entsprechendes weiteres Mikroskopie-Bild erzeugt wird, wobei vorzugsweise nach dem zweiten und vor dem dritten Schritt die Probe hinsichtlich in der Probe ablaufender Prozesse fixiert wird.

5. Verfahren nach Anspruch 4, wobei vor dem dritten Schritt ein Probenausschnitt abhängig vom Muster ausgewählt und im dritten Schritt das weitere Mikroskopie-Bild nur von dem Probenausschnitt erzeugt wird.

6. Verfahren nach einem der obigen Ansprüche, wobei zuerst mit einem der ersten bis vierten Mikroskopieverfahren ein entsprechendes Mikroskopie-Bild erzeugt wird, darin eine Bildauswertung vorgenommen wird und daraus mindestens eine Steuergröße für die Aufnahme mindestens eines der anderen der ersten bis vierten Mikroskopie-Bilder abgeleitet wird, wobei die mind. eine Steuergröße umfasst:
- Fokuslage,
- Probentischeinstellung,
- Objektivwahl,
- Struktur einer Beleuchtungsstrahlung im vierten Mikroskopieverfahren und
- Bildausschnittswahl.

7. Verfahren nach einem der obigen Ansprüche, wobei vor der Überlagerung der Mikroskopie-Bilder die relative Lage der Mikroskopie-Bilder zueinander bestimmt wird und die Mikroskopie-Bilder lagejustiert überlagert werden.

8. Verfahren nach Anspruch 1, wobei vor der Überlagerung der Mikroskopie-Bilder zum Komposit-Bild eine Justierung eines höher aufgelösten und eines niedriger aufgelösten Mikroskopie-Bildes erfolgt, indem die Mikroskopie-Bilder anhand sich entsprechender Strukturen passend zueinander ausgerichtet werden.

9. Kombinations-Mikroskop, ausgebildet zur Mikroskopie einer Probe (2) mit mindestens zwei sich in ihrer Auflösung unterscheidenden Mikroskopieverfahren, wobei das Mikroskop (1) aufweist:
- ein Objektiv (3), das für alle Mikroskopieverfahren die Probe (2) erfaßt,
- einen Detektionsstrahlengang (8) und mindestens einen Beleuchtungsstrahlengang, die zumindest teilweise zusammenfallen und alle durch das Objektiv (3) laufen,
- ein an den Detektionsstrahlengang (8) angebundenes Mikroskopmodul, das eine Tubuslinse (5) und einen Flächendetektor (6) aufweist und zusammen mit dem Objektiv (3) die Probe (2) auf den Flächendetektor (6) abbildet,
- ein an den Beleuchtungsstrahlengang angebundenes Weitfeldbeleuchtungsmodul (17) zur Weitfeldbeleuchtung der Probe (2) durch das Objektiv (3), wobei das Weitfeldbeleuchtungsmodul (17) zur Abgabe von Beleuchtungsstrahlung bei mindestens zwei verschiedenen Wellenlängenbereichen ansteuerbar ist, und
- ein im Beleuchtungsstrahlengang in Beleuchtungsrichtung dem Weitfeldbeleuchtungsmodul (17) nachgeordneter Beleuchtungsstrahlungsmodulator (23, 24), der ansteuerbar im Beleuchtungsstrahlengang aktivier- und deaktivierbar ist und im aktivierten Zustand der Beleuchtungsstrahlung eine streifenförmige Modulation aufprägt, wobei der Beleuchtungsstrahlungsmodulator (23, 24) derart ansteuerbar ist, daß die streifenförmige Modulation senkrecht zu einer optischen Achse des Beleuchtungsstrahlenganges verschiebbar ist, und wobei weiter eine ansteuerbare Rotationseinrichtung (25) vorgesehen ist, mit welcher entweder die streifenförmige Modulation um die optische Achse des Beleuchtungsstrahlenganges drehbar ist oder durch den aktivierten Beleuchtungsstrahlungsmodulator (23, 24) gelaufene und dadurch mit der streifenförmigen Modulation versehenen Strahlenbündel im Beleuchtungsstrahlengang um die optische Achse des Beleuchtungsstrahlenganges drehbar sind, und
- eine Steuereinrichtung (28), die mit dem Mikroskopmodul, dem Weitfeldbeleuchtungsmodul (17), dem Beleuchtungsstrahlungsmodulator (23, 24) und der Rotationseinrichtung (25) verbunden ist und das Mikroskop in verschiedene Betriebsmodi steuert, wobei die Steuereinrichtung (28) dazu ausgebildet ist, in einem ersten Betriebsmodus den Beleuchtungsstrahlungsmodulator (23, 24) zu aktivieren und zusammen mit der Rotationseinrichtung (25) anzusteuern sowie den Flächendetektor (6) auszulesen und von diesem gelieferte Daten zu verarbeiten, um das erste Mikroskopieverfahren des Anspruchs 1 auszuführen, und dazu ausgebildet ist, in einem zweiten Betriebsmodus den Beleuchtungsstrahlungsmodulator (23, 24) zu deaktivieren und das Weitfeldbeleuchtungsmodul (17) nacheinander zur Abgabe der Beleuchtungsstrahlung bei den mindestens zwei verschiedenen Wellenlängenbereichen anzusteuern sowie den Flächendetektor (6) auszulesen und von diesem gelieferte Daten zu verarbeiten, um das zweite Mikroskopieverfahren des Anspruchs 1 auszuführen.

10. Mikroskop nach Anspruch 9, wobei an den Detektionsstrahlengang (8) und den Beleuchtungsstrahlengang aktivierbar ein ebenfalls von der Steuereinrichtung (28) angesteuertes Laserscanningmodul (9) angebunden ist, um zusammen mit dem Objektiv (3) die Probe (2) mittels Laser-Scanning-Mikroskopie konfokal abzubilden, wobei die Steuereinrichtung (28) dazu ausgebildet ist, in einem dritten Betriebsmodus das Laserscanningmodul (9) anzusteuern, um das dritte Mikroskopieverfahren des Anspruchs 1 auszuführen.

11. Mikroskop nach Anspruch 9 oder 10, wobei an den Beleuchtungsstrahlengang aktivierbar ein ebenfalls von der Steuereinrichtung (28) angesteuertes Manipulationsbeleuchtungsstrahlungsmodul (22) angebunden ist, um die Probe (2) punkt- oder zeilenscannend mit Manipulationsbeleuchtungsstrahlung zur Manipulation von Fluoreszenzeigenschaften der Probe (2) zu beleuchten, wobei vorzugsweise vom Manipulationsbeleuchtungsstrahlungsmodul (22) abgegebene Manipulationsbeleuchtungsstrahlung auch den Beleuchtungsstrahlungsmodulator (23, 24) durchläuft, wenn dieser aktiviert ist.

12. Mikroskop nach einem der Ansprüche 9 bis 11, wobei ein ebenfalls von der Steuereinrichtung (28) angesteuertes TIRF-Beleuchtungsmodul (19) aktivierbar an den Beleuchtungsstrahlengang angebunden ist, um die Probe (2) durch das Objektiv (3) so schräg zu beleuchten, daß in einem auf der Probe (2) angeordneten Deckglas Totalreflexion stattfindet.

13. Mikroskop nach einem der Ansprüche 9 bis 12, wobei im Detektionsstrahlengang (8) ein Strahlteiler (4) vorgesehen ist, der in der Probe (2) angeregte Fluoreszenzstrahlung zum Flächendetektor (6) leitet.

14. Mikroskop nach einem der Ansprüche 9 bis 13, wobei in einer Zwischenbildebene des Beleuchtungsstrahlenganges ein von der Steuereinrichtung (28) angesteuertes DMD (48) steht, dessen Spiegel Beleuchtungsstrahlung in einer off-Stellung zu einer Strahlfalle und in einer on-Stellung in Richtung auf das Objektiv (3) lenken.

15. Mikroskop nach Anspruch 14, wobei dem DMD im Beleuchtungsstrahlengang ein Phasenmodulator (46) vorgeordnet ist.

## Claims

1. A method for generating an image of a sample by means of microscopy methods which provide different spatial resolutions, wherein at least two of the following microscopy methods are combined:
- a first microscopy method in which the sample is excited to luminescence by structured line-type or wide-field illumination, the structuring is rotated and shifted several times for each rotation position, wherein at least three rotation positions and at least three shift positions per rotation position are realized, in each position the luminescent sample is imaged onto a 2D detector with a predetermined optical resolution and a first microscopic image with spatial resolution increased beyond the predetermined optical resolution is generated from the thus-obtained frames by a computational processing comprising Fourier analysis,
- a second microscopy method in which the sample is labelled with label molecules which can be excited to emit particular luminescence radiation only after being activated by a switching signal, the switching signal is applied to the sample such that only a sub-set of the label molecules present in the sample is activated, wherein there are sub-areas in the sample in which activated label molecules have a distance to their closest neighbouring activated label molecules which is greater than or equal to the predetermined optical resolution, the activated molecules are excited to emit luminescence radiation, the sample emitting luminescence radiation is imaged onto the 2D detector with the predetermined optical resolution, the image is analyzed and image data are generated from it which give the geometric locations of the label molecules emitting luminescence radiation with a local resolution increased above the optical resolution, and a second microscopic image is generated from the image data,
- a third microscopy method for generating a third microscopic image by means of laser scanning microscopy, and
- a fourth microscopy method which the sample is labelled with label molecules suitable for STED technique and a fourth microscopic image is generated by means of STED microscopy,
- wherein the at least two obtained microscopic images are combined into a composite image, in particular are superimposed.

2. The method according to claim 1, wherein all four microscopy methods are carried out and the four microscopic images are combined into the composite image.

3. The method according to claim 1, wherein a fifth microscopy method is also carried out in which the sample is labelled with label molecules suitable for ESA or RESOLFT technique and a fifth microscopic image is generated by means of ESA or RESOLFT, and the fifth microscopic image is also combined into the composite image.

4. The method according to claim 1, wherein in a first step a microscopic image of the sample is generated by the first to fourth microscopy methods, in a second step this image is scanned for a predetermined pattern and, if the predetermined pattern is discovered, in a third step a further microscopic image is generated by at least one of the other first to fourth microscopy methods, wherein preferably after the second and prior to the third step the sample is fixed regarding processes taking place in the sample.

5. The method according to claim 4, wherein prior to the third step a sample view is selected depending on the pattern and in the third step the further microscopic image is generated only for the sample view.

6. The method according to any of the above claims, wherein firstly a microscopic image is generated with any of the first to fourth microscopy methods, this image is analyzed and at least one control variable is derived therefrom for the acquisition of at least one of the other first to fourth microscopic images, wherein the at least one control variable comprises:
- focus position,
- sample stage adjustment,
- choice of objective,
- structure of an illumination radiation in the fourth microscopy method and
- choice of image view.

7. The method according to any of the above claims, wherein the position of the microscopic images relative to each other is determined prior to the superimposition of the microscopic images and the microscopic images are superimposed position-adjusted.

8. The method according to claim 1, wherein before the microscopic images are superimposed into the composite image, an adjustment of one higher resolved and one lower resolved microscopic image is carried out by way of adjusting the microscopic images to each other according to corresponding structure.

9. A combination microscope, adapted for microscopy of a sample (2) by at least two microscopy methods differing in their resolution, wherein the microscope (1) comprises:
- an objective (3) which senses the sample (2) for all microscopy methods,
- a detection beam path (8) and at least one illumination beam path which at least partially coincide and both pass through the objective (3),
- a microscope module connected to the detection beam path (8) which comprises a tube lens (5) and a 2D detector (6) and, together with the objective (3), images the sample (2) onto the 2D detector (6),
- a wide-field illumination module (17) connected to the illumination beam path for the wide-field illumination of the sample (2) through the objective (3), wherein the wide-field illumination module (17) can be controlled to emit illumination radiation in at least two different wavelength ranges, and
- an illumination radiation modulator (23, 24) which is located in the illumination beam path downstream of the wide-field illumination module (17) in illumination direction and which can be controllably activated and de-activated in the illumination beam path and imposes in its activated state a stripe modulation to the illumination radiation, wherein the illumination radiation modulator (23, 24) can be controlled such that the stripe modulation can be shifted perpendicular to an optical axis of the illumination beam path, and wherein a controllable rotation apparatus (25) is further provided with which either the stripe modulation is rotatable about the optical axis of the illumination beam path or ray beams that have passed through the activated illumination radiation modulator (23, 24) and are thereby provided with the stripe modulation are rotatable in the illumination beam path about the optical axis of the illumination beam path, and
- a control device (28) which is connected to the microscope module, the wide-field illumination module (17), the illumination radiation modulator (23, 24) and the rotation device (25) and controls the microscope in different operating modes, wherein the control device (28) is adapted to activate the illumination radiation modulator (23, 24) in a first operating mode and to control it together with the rotation device (25) as well as to read the 2D detector (6) and to process data delivered by the latter, in order to carry out the first microscopy method of claim 1, and is adapted to de-activate the illumination radiation modulator (23, 24) in a second operating mode and to control the wide-field illumination module (17) successively to emit the illumination radiation in the at least two different wavelength ranges as well as to read the 2D detector (6) and to process data delivered by the latter, in order to carry out the second microscopy method of claim 1.

10. The microscope according to claim 9, wherein a laser scanning module (9) also controlled by the control device (28) is connected to be activated in the detection beam path (8) and the illumination beam path, in order, together with the objective (3), to confocally image the sample (2) by means of laser scanning microscopy, wherein the control device (28) is adapted to control the laser scanning module (9) into a third operating mode in order to carry out the third microscopy method of claim 1.

11. The microscope according to claim 9 or 10, wherein a manipulation illumination radiation module (22) likewise controlled by the control device (28) is connected to be activated in the illumination beam path, in order to illuminate the sample (2) in spot-type or line-type scanning manner with manipulation illumination radiation for the manipulation of fluorescence properties of the sample (2), wherein preferably manipulation illumination radiation emitted by the manipulation illumination radiation module (22) also passes through the illumination radiation modulator (23, 24), when that is activated.

12. The microscope according to any of claims 9 to 11, wherein a TIRF illumination module (19) likewise controlled by the control device (28) is connected to be activated in the illumination beam path, in order to illuminate the sample (2) through the objective (3) under an angle such that total reflection is effected at a cover glass arranged on the sample (2).

13. The microscope according to any of claims 9 to 12, wherein a beam splitter (4) which guides fluorescence radiation excited in the sample (2) to the 2D detector (6) is provided in the detection beam path (8).

14. The microscope according to any of claims 6 to 13, wherein a DMD (48) controlled by the control device (28) is provided in an intermediate image plane of the illumination beam path, mirrors of which DMD (48) directing illumination radiation to a beam trap when in an off-position and to the objective (3) when in an on-position.

15. The microscope according to claim 14, wherein a phase modulator (46) is arranged in the illumination beam path and in front of the DMD.

## Revendications

1. Procédé pour générer une image d'un échantillon au moyen de procédés de microscopie qui réalisent différentes résolutions locales, au moins deux des procédés de microscopie suivants étant combinés:
- un premier procédé de microscopie dans lequel l'échantillon est excité en luminescence par un éclairage structuré en lignes ou en champ large, la structuration est tournée et décalée plusieurs fois pour chaque position de rotation, au moins trois positions de rotation et au moins trois positions de décalage par position de rotation étant réalisées, l'échantillon luminescent est à chaque fois représenté avec une résolution optique prédéfinie sur un détecteur à jonction et une première image de microscopie ayant une résolution locale augmentée au-delà de la résolution optique prédéfinie est générée à partir des images ainsi obtenues par un traitement arithmétique incluant une analyse de Fourier,
- un deuxième procédé de microscopie dans lequel l'échantillon est marqué avec des molécules de marquage qui peuvent être activées avec un signal ultrasonique de telle sorte qu'elles ne peuvent être excitées ensuite seulement en vue de délivrer un rayonnement de luminescence donné, le signal ultrasonique est appliqué à l'échantillon de telle sorte que seule une quantité partielle des molécules de marquage présentes dans l'échantillon est activée, des zones partielles étant produites dans l'échantillon dans lesquelles des molécules de marquage activées présentent par rapport aux prochaines molécules de marquage activées voisines un écart qui est égal ou supérieur à la résolution optique prédéfinie, les molécules activées sont excitées en vue de délivrer un rayonnement de luminescence, l'échantillon délivrant le rayonnement de luminescence est représenté sur le détecteur à jonction avec la résolution optique prédéfinie, l'image est analysée et à partir de celle-ci sont générées des données d'images qui indiquent les emplacements géométriques des molécules de marquage délivrant le rayonnement de luminescence avec une résolution locale augmentée au-delà de la résolution optique, et une deuxième image de microscopie est générée à partir des données d'image,
- un troisième procédé de microscopie destiné à générer une troisième image de microscopie au moyen de la microscopie par balayage laser, et
- un quatrième procédé de microscopie, avec lequel l'échantillon est marqué avec des molécules de marquage adaptées à la technique STED, et une quatrième image de microscopie étant générée au moyen de la microscopie STED,
- les au moins deux images de microscopie obtenues étant combinées en une image composite, notamment superposées.

2. Procédé selon la revendication 1, les quatre procédés de microscopie étant mis en oeuvre et les quatre images de microscopie étant combinées en une image composite.

3. Procédé selon la revendication 1, un cinquième procédé de microscopie étant également mis en oeuvre, avec lequel l'échantillon est marqué avec des molécules de marquage adaptées à la technique ESA ou RESOLFT, et une cinquième image de microscopie étant générée au moyen de la technique ESA ou RESOLFT et jointe à la combinaison en l'image composite.

4. Procédé selon la revendication 1, une image de microscopie correspondante de l'échantillon étant générée dans une première étape avec le premier au quatrième procédé de microscopie, un modèle prédéfini étant recherché dans celle-ci dans une deuxième étape et, si le modèle prédéfini est trouvé, une image de microscopie supplémentaire correspondante étant générée dans une troisième étape avec au moins un autre parmi le premier au quatrième procédé de microscopie, l'échantillon étant fixé du point de vue des processus qui se déroulent dans l'échantillon de préférence après la deuxième et avant la troisième étape.

5. Procédé selon la revendication 4, une portion d'échantillon dépendante du modèle étant sélectionnée avant la troisième étape et, dans la troisième étape, l'image de microscopie supplémentaire n'étant générée que pour la portion d'échantillon.

6. Procédé selon l'une des revendications précédentes, une image de microscopie correspondante étant tout d'abord générée avec l'un des premier à quatrième procédés de microscopie, une interprétation d'image étant effectuée dans celle-ci et au moins une grandeur de commande pour l'acquisition d'au moins l'une des autres des première à quatrième images de microscopie en étant dérivée, l'au moins une grandeur de commande comprenant:
- position du foyer,
- réglage de la platine porte-échantillon,
- sélection de l'objectif,
- structure d'un rayonnement d'éclairage dans le quatrième procédé de microscopie et
- sélection de la portion d'image.

7. Procédé selon l'une des revendications précédentes, la position relative des images de microscopie entre elles étant déterminée avant la superposition des images de microscopie et les images de microscopie étant superposées avec ajustement de la position.

8. Procédé selon la revendication 1, un ajustement d'une image de microscopie à résolution plus haute et d'une image de microscopie à résolution plus basse étant effectué avant la superposition des images de microscopie en l'image composite, en ce que les images de microscopie sont orientées de manière adaptée les unes par rapport aux autres à l'aide de structures correspondantes.

9. Microscope à combinaison, configuré pour la microscopie d'un échantillon (2) avec au moins deux procédés de microscopie qui se différencient au niveau de leur résolution, le microscope (1) possédant :
- un objectif (3) qui capture l'échantillon (2) pour tous les procédés de microscopie,
- un trajet de rayon de détection (8) et au moins un trajet de rayon d'éclairage, lesquels coïncident au moins partiellement les uns avec les autres et passent tous à travers l'objectif (3),
- un module de microscope relié au trajet de rayon de détection (8), lequel possède une lentille en tube (5) et un détecteur à jonction (6) et, conjointement avec l'objectif (3), représente l'échantillon (2) sur le détecteur à jonction (6),
- un module d'éclairage à champ large (17) relié au trajet de rayon d'éclairage pour l'éclairage à champ large de l'échantillon (2) à travers l'objectif (3), le module d'éclairage à champ large (17) pouvant être commandé pour délivrer un rayonnement d'éclairage à au moins deux plages de longueurs d'onde différentes, et
- un modulateur de rayonnement d'éclairage (23, 24) disposé dans le trajet de rayon d'éclairage après le module d'éclairage à champ large (17) dans le sens de l'éclairage, lequel peut être active et désactivé dans le trajet de rayon d'éclairage et, à l'état activé, imprime au rayonnement d'éclairage une modulation en forme de bandes, le modulateur de rayonnement d'éclairage (23, 24) pouvant être commandé de telle sorte que la modulation en forme de bandes peut être décalée perpendiculairement à un axe optique du trajet de rayon d'éclairage, et un dispositif de rotation (25) commandable étant en outre présent, avec lequel soit la modulation en forme de bandes peut être amenée à effectuer une rotation autour de l'axe optique du trajet de rayon d'éclairage, soit les faisceaux de rayons dans le trajet de rayon d'éclairage qui sont passés à travers le modulateur de rayonnement d'éclairage (23, 24) activé et ainsi pourvus de la modulation en forme de bandes peuvent être amenés à effectuer une rotation autour de l'axe optique du trajet de rayon d'éclairage, et
- un dispositif de commande (28) qui est relié au module de microscope, au module d'éclairage à champ large (17), au modulateur de rayonnement d'éclairage (23, 24) et au dispositif de rotation (25) et commande le microscope dans différents modes de fonctionnement, le dispositif de commande (28) étant configuré pour, dans un premier mode de fonctionnement, activer le modulateur de rayonnement d'éclairage (23, 24) et le commander conjointement avec le dispositif de rotation (25) et aussi relever le détecteur à jonction (6) et traiter les données délivrées par celui-ci afin de mettre en oeuvre le premier procédé de microscopie selon la revendication 1, et étant configuré pour, dans un deuxième mode de fonctionnement, désactiver le modulateur de rayonnement d'éclairage (23, 24) et commander le module d'éclairage à champ large (17) successivement en vue de délivrer le rayonnement d'éclairage aux au moins deux plages de longueurs d'onde différentes et aussi relever le détecteur à jonction (6) et traiter les données délivrées par celui-ci afin de mettre en oeuvre le deuxième procédé de microscopie selon la revendication 1.

10. Microscope selon la revendication 9, un module de balayage laser (9) lui aussi commandé par le dispositif de commande (28) étant relié de manière activable au trajet de rayon de détection (8) et au trajet de rayon d'éclairage afin de représenter, conjointement avec l'objectif (3), l'échantillon (2) de manière confocale au moyen de la microscopie à balayage laser, le dispositif de commande (28) étant configuré pour, dans un troisième mode de fonctionnement, commander le module de balayage laser (9) afin de mettre en oeuvre le troisième procédé de microscopie selon la revendication 1.

11. Microscope selon la revendication 9 ou 10, un module de rayonnement d'éclairage de manipulation (22) lui aussi commandé par le dispositif de commande (28) étant relié de manière activable au trajet de rayon d'éclairage afin d'éclairer l'échantillon (2) avec balayage par point ou par ligne avec un rayonnement d'éclairage de manipulation en vue de la manipulation de propriétés de fluorescence de l'échantillon (2), le rayonnement d'éclairage de manipulation délivré par le module de rayonnement d'éclairage de manipulation (22) passant de préférence également à travers le modulateur de rayonnement d'éclairage (23, 24) lorsque celui-ci est activé.

12. Microscope selon l'une des revendications 9 à 11, un module d'éclairage TIRF (19) lui aussi commandé par le dispositif de commande (28) étant relié de manière activable au trajet de rayon d'éclairage afin d'éclairer l'échantillon (2) à travers l'objectif (3) avec une inclinaison telle qu'il se produit une réflexion totale dans une lamelle couvre-objet disposée sur l'échantillon (2).

13. Microscope selon l'une des revendications 9 à 12, un diviseur de rayon (4) étant disposé dans le trajet de rayon de détection (8), lequel conduit le rayonnement de fluorescence excité dans l'échantillon (2) vers le détecteur à jonction (6).

14. Microscope selon l'une des revendications 9 à 13, un DMD (48) commandé par le dispositif de commande (28) se trouvant dans un plan d'image intermédiaire du trajet de rayon d'éclairage, dont les miroirs guident le rayonnement d'éclairage vers un piège à rayon dans une position désactivée et en direction de l'objectif (3) dans une position activée.

15. Microscope selon la revendication 14, un modulateur de phase (46) étant disposé avant le DMD dans le trajet de rayon d'éclairage.
